(19) Europäisches Patentamt
European Patent Office
Office européen des brevets

(11) EP 4 778 994 A1

(12) EUROPEAN PATENT APPLICATION
published in accordance with Art. 153(4) EPC

(43) Date of publication:
**22.07.2026 Bulletin 2026/30**

(21) Application number: **24865363.6**

(22) Date of filing: **05.09.2024**

(51) International Patent Classification (IPC):
***C09K 11/06*** *(2006.01)* ***G02B 5/20*** *(2006.01)*

(52) Cooperative Patent Classification (CPC):
**C09K 11/06; G02B 5/20**

(86) International application number:
**PCT/JP2024/031950**

(87) International publication number:
**WO 2025/057863 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.09.2023 JP 2023147188**

(71) Applicants:
- **Idemitsu Kosan Co.,Ltd.**
**Tokyo 100-8321 (JP)**
- **Institute of Science Tokyo**
**Tokyo 152-8550 (JP)**

(72) Inventors:
- **MURAKAMI, Yoichi**
**Tokyo 152-8550 (JP)**
- **ENOMOTO, Riku**
**Tokyo 152-8550 (JP)**

(74) Representative: **Gille Hrabal Partnerschaftsgesellschaft mbB**
**Patentanwälte**
**Brucknerstraße 20**
**40593 Düsseldorf (DE)**

# (54) ORGANIC SOLID UPCONVERSION MATERIAL

(57) An organic solid upconversion material includes: two or more triplet sensitizers; and an organic luminescent material. The two or more triplet sensitizers have respective maximum absorption wavelengths $\lambda_{MAX}$(TS) different from each other in a wavelength region longer than a maximum emission wavelength $\lambda_{MAX}$(EM) of the organic luminescent material. A lowest triplet energy of each of the two or more triplet sensitizers is equal to or larger than a lowest triplet energy of the organic luminescent material, and a lowest singlet energy of each of the two or more triplet sensitizers is smaller than a lowest singlet energy of the organic luminescent material.

FIG. 1

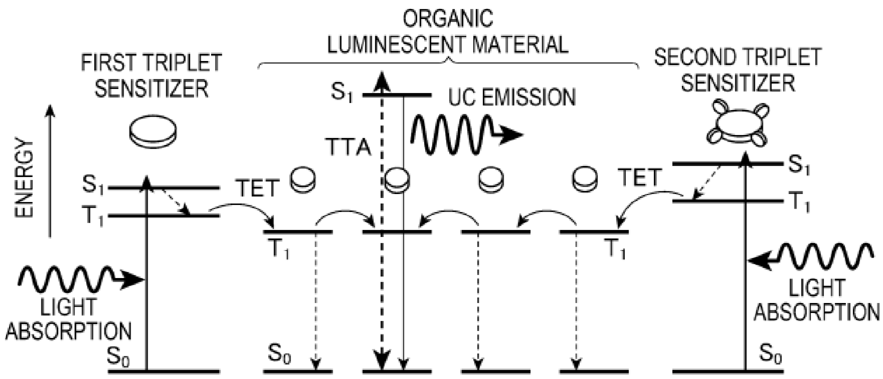


EP 4 778 994 A1

## Description

### TECHNICAL FIELD

The present invention relates to an organic solid upconversion material.

### BACKGROUND ART

Optical upconversion has attracted attention as a technology of converting low-energy light into high-energy light. For instance, Non-Patent Literature 1 has proposed the following mechanism. In a combination of a sensitizer (e.g., PtOEP) having a large intersystem crossing rate constant from the lowest singlet state to the lowest triplet state and luminescent molecules (e.g., diphenylanthracene (DPA)), the lowest singlet state is generated by triplet-triplet annihilation (TTA) between the luminescent molecules (DPA) that have been excited to the lowest triplet state by energy transfer from the sensitizer, and light emission occurs.
In addition to Non-Patent Literature 1, for instance, Patent Literatures 1 to 3 and Non-Patent Literatures 2 to 5 also describe technologies related to optical upconversion.

### CITATION LIST

### PATENT LITERATURE(S)

Patent Literature 1: JP 2020-111751 A
Patent Literature 2: US 10,950,803 B2
Patent Literature 3: WO 2023/063289 A1

### NON-PATENT LITERATURE(S)

Non-Patent Literature 1: Journal of Applied Physics, 101, 023101 (2007)
Non-Patent Literature 2: J. Phys. Chem. Lett., 2013, 4, 4113-4118
Non-Patent Literature 3: J. Phys. Chem. C, 2014, 118, 14256-14265
Non-Patent Literature 4: Mater. Horiz., 2017, 4, 83-87
Non-Patent Literature 5: J. Mater. Chem. C, 2018, 6, 5609-5615

### SUMMARY OF THE INVENTION

### PROBLEM(S) TO BE SOLVED BY THE INVENTION

Practically, it is advantageous for optical upconversion materials to be in a solid state. However, optical upconversion materials in the solid state have a problem of a low upconversion quantum efficiency and a problem of a large excitation light intensity threshold (Ith) at which upconversion occurs. Non-Patent Literature 2 has suggested that the causes of these problems be aggregation of a sensitizer.
As means for suppressing the aggregation of a sensitizer, for instance, Non-Patent Literature 2 discloses that luminescent molecules and a sensitizer are bonded to side chains of a polymer, Non-Patent Literature 3 discloses that luminescent molecules and a sensitizer are dispersed in a polymer such as polystyrene, Non-Patent Literature 4 discloses that an ink in which a sensitizer and luminescent molecules are dissolved is cast on a substrate and rapidly dried to thereby cause solidification (non-equilibrium state) before the sensitizer is aggregated, and Non-Patent Literature 5 discloses that both a sensitizer and luminescent molecules are ionic materials, and ionic crystals are formed using the sensitizer and the luminescent molecules which are ionic materials to thereby achieve an improvement in crystallinity and homogeneous dispersion of the sensitizer.
Patent Literature 1 describes a photon upconversion composition in which a triplet sensitizer (PtOEP) is dispersed in the form of microcrystals.
Patent Literature 2 describes a compound in which three components of a sensitizer, an acceptor material, and a luminescent material are connected together and also describes that a solution containing the compound exhibits upconversion.

Patent Literature 3 describes an organic solid upconversion material containing a triplet sensitizer and an organic luminescent material, in which the triplet sensitizer and the organic luminescent material form a solid solution crystal. In Patent Literature 3, the organic solid upconversion material is irradiated with monochromatic light having a wavelength of 532 nm as excitation light, and the upconversion luminous intensity (UC luminous intensity) and the upconversion quantum efficiency (UC quantum efficiency) of the organic solid upconversion material are evaluated.

However, in order to put optical upconversion materials into practical use, it is desirable to improve the UC luminous intensity and the UC quantum efficiency for excitation light that includes light having a wide wavelength range, such as sunlight.

An object of the invention is to provide an organic solid upconversion material that exhibits a high upconversion luminous intensity, even in a solid state, for excitation light including light having a wide wavelength range, such as sunlight.

MEANS FOR SOLVING THE PROBLEM(S)

Herein, the term "maximum emission wavelength $\lambda_{MAX}$(EM) of an organic luminescent material" refers to a wavelength at which the luminous intensity in a solid-state emission spectrum of the organic luminescent material is at a maximum, and the term "maximum absorption wavelength $\lambda_{MAX}$(TS) of a triplet sensitizer" refers to a wavelength at which the absorbance in an absorption spectrum of a solution of the triplet sensitizer is at a maximum in a wavelength region longer than the maximum emission wavelength $\lambda_{MAX}$(EM) of the organic luminescent material.

According to an aspect of the invention, there is provided an organic solid upconversion material, including: two or more triplet sensitizers; and an organic luminescent material, in which

when a wavelength at which a luminous intensity in a solid-state emission spectrum of the organic luminescent material is at a maximum is defined as a maximum emission wavelength $\lambda_{MAX}$(EM), and a wavelength at which an absorbance in a solution absorption spectrum of each of the two or more triplet sensitizers is at a maximum in a wavelength region longer than the maximum emission wavelength $\lambda_{MAX}$(EM) is defined as a maximum absorption wavelength $\lambda_{MAX}$(TS), the maximum absorption wavelengths $\lambda_{MAX}$(TS) of the two or more triplet sensitizers are different from each other,

a lowest triplet energy of each of the two or more triplet sensitizers is equal to or larger than a lowest triplet energy of the organic luminescent material, and

a lowest singlet energy of each of the two or more triplet sensitizers is smaller than a lowest singlet energy of the organic luminescent material.

In the aspect of the invention, the two or more triplet sensitizers and the organic luminescent material preferably form a solid solution crystal.

In the aspect of the invention, when, among the maximum absorption wavelengths $\lambda_{MAX}$(TS) of the two or more triplet sensitizers, the maximum absorption wavelength $\lambda_{MAX}$(TS) closest to a long-wavelength region is defined as a maximum absorption wavelength $\lambda_{LWMAX}$(TS) and the maximum absorption wavelength $\lambda_{MAX}$(TS) closest to a short-wavelength region is defined as a maximum absorption wavelength $\lambda_{SWMAX}$(TS), a difference $\Delta\lambda_{MAX}$ between the maximum absorption wavelength $\lambda_{LWMAX}$(TS) and the maximum absorption wavelength $\lambda_{SWMAX}$(TS) is preferably in a range from 10 nm to 120 nm.

In the aspect of the invention, a total molar concentration of the two or more triplet sensitizers in the organic solid upconversion material is preferably $2.0 \times 10^{-5}$ mol/L or more.

In the aspect of the invention, a molar concentration of each of the two or more triplet sensitizers in the organic solid upconversion material is preferably in a range from $1.0 \times 10^{-5}$ mol/L to $5.0 \times 10^{-3}$ mol/L.

In the aspect of the invention, when a wavelength at which a light absorption coefficient of each of the two or more triplet sensitizers in a solid-state absorption spectrum of the organic solid upconversion material is at a maximum in a wavelength region longer than the maximum emission wavelength $\lambda_{MAX}$(EM) of the organic luminescent material is defined as a maximum absorption wavelength $\lambda_{MAX}$(MC), a difference $\lambda_{MAX}$(MC) - $\lambda_{MAX}$(TS) between the maximum absorption wavelength $\lambda_{MAX}$(MC) and the maximum absorption wavelength $\lambda_{MAX}$(TS) is preferably 10 nm or less in each of the two or more triplet sensitizers.

In the aspect of the invention, the organic luminescent material is preferably an anthracene derivative.

In the aspect of the invention, the organic luminescent material is preferably a compound represented by a formula (10) below or a compound represented by a formula (11) below.

[Formula 1]

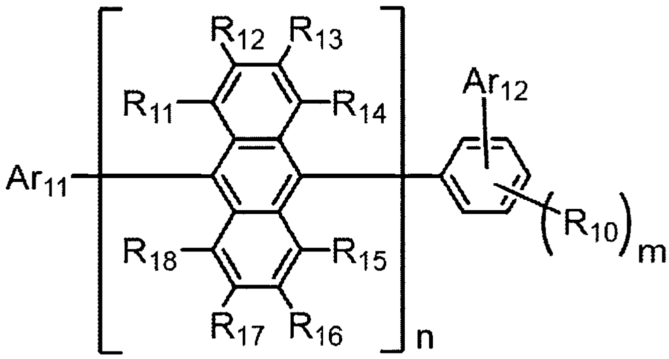

(10)

In the formula (10):

$Ar_{11}$ is a substituted or unsubstituted fused aryl group having 10 to 50 ring carbon atoms;
$Ar_{12}$ is a substituted or unsubstituted aryl group having 6 to 50 ring carbon atoms;
$R_{10}$ to $R_{18}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a carboxy group, a halogen atom, a cyano group, a nitro group, or a hydroxy group;
m is 4, and four $R_{10}$ are mutually the same or different;
n is 1, 2, or 3; and
when n is 2 or 3, groups represented by a formula (10a) below in the compound represented by the formula (10) are mutually the same or different, and each * represents a bonding position.

[Formula 2]

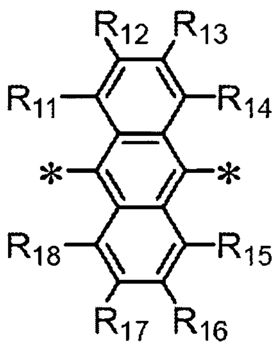

(10a)

[Formula 3]

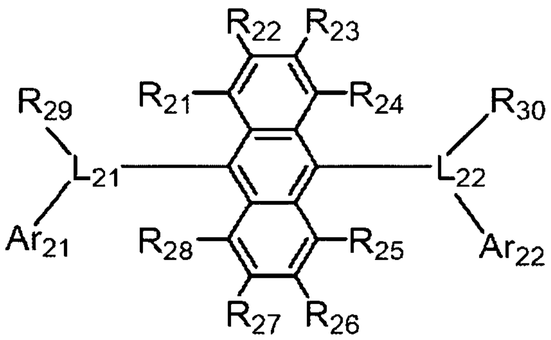

(11)

In the formula (11):

$L_{21}$ and $L_{22}$ are each independently a substituted or unsubstituted fused aryl group having 10 to 20 ring carbon atoms;
$Ar_{21}$ and $Ar_{22}$ are each independently a hydrogen atom or a substituted or unsubstituted aryl group having 6 to 50 ring carbon atoms;
$R_{21}$ to $R_{30}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a substituted or unsubstituted silyl group, a carboxy group, a halogen atom, a cyano group, a nitro group, or a hydroxy group;
a plurality of $Ar_{21}$, a plurality of $Ar_{22}$, a plurality of $R_{29}$, and a plurality of $R_{30}$ may be present;
a combination of adjacent two or more of $Ar_{21}$ and $R_{29}$ are mutually bonded to form a substituted or unsubstituted monocyclic ring, mutually bonded to form a substituted or unsubstituted fused ring, or not mutually bonded;
a combination of adjacent two or more of $Ar_{22}$ and $R_{30}$ are mutually bonded to form a substituted or unsubstituted monocyclic ring, mutually bonded to form a substituted or unsubstituted fused ring, or not mutually bonded; and
a group represented by a formula (11a) below and a group represented by a formula (11b) below in the compound represented by the formula (11) are mutually different, and each * represents a bonding position.

[Formula 4]

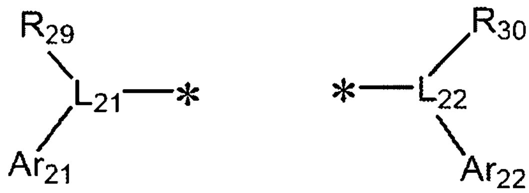

(11a) (11b)

In the aspect of the invention, the two or more triplet sensitizers each preferably include an organic metal complex.

In the aspect of the invention, the two or more triplet sensitizers each preferably contain a platinum atom.

According to the above aspect of the invention, an organic solid upconversion material can be provided that exhibits a high upconversion luminous intensity, even in a solid state, for excitation light including light having a wide wavelength range, such as sunlight.

BRIEF DESCRIPTION OF DRAWINGS

Fig. 1 illustrates an upconversion mechanism in an organic solid upconversion material according to an exemplary

embodiment.

Fig. 2A is a schematic diagram of upconversion under sunlight irradiation in a case where a single triplet sensitizer (a first triplet sensitizer) is used together with an organic luminescent material.

Fig. 2B is a schematic diagram of upconversion under sunlight irradiation in a case where another single triplet sensitizer (a second triplet sensitizer) is used together with the organic luminescent material.

Fig. 2C is a schematic diagram of upconversion under sunlight irradiation in a case where two triplet sensitizers (the first triplet sensitizer and the second triplet sensitizer) are used together with the organic luminescent material.

Fig. 3 is a thermodynamic equilibrium phase diagram for a binary molecular mixture system, representing a solid solution phase in an organic solid upconversion material.

Fig. 4A is a digital camera image of ANNP as the organic luminescent material.

Fig. 4B is a digital camera image of an organic solid upconversion material containing a single triplet sensitizer (PtOEP as the first triplet sensitizer) and the organic luminescent material (ANNP).

Fig. 4C is a digital camera image of an organic solid upconversion material containing another single triplet sensitizer (PtTPP as the second triplet sensitizer) and the organic luminescent material (ANNP).

Fig. 4D is a digital camera image of an organic solid upconversion material containing two triplet sensitizers (PtOEP and PtTPP) and the organic luminescent material (ANNP).

Fig. 5A illustrates absorption spectra of a solution containing PtOEP and the organic solid upconversion material containing PtOEP.

Fig. 5B illustrates absorption spectra of a solution containing PtTPP and the organic solid upconversion material containing PtTPP.

Fig. 5C illustrates absorption spectra of a solution containing PtOEP and PtTPP and the organic solid upconversion material containing PtOEP and PtTPP.

Fig. 6 illustrates emission spectra of the organic solid upconversion material containing PtOEP, the organic solid upconversion material containing PtTPP, and the organic solid upconversion material containing PtOEP and PtTPP.

DESCRIPTION OF EMBODIMENT(S)

An organic solid upconversion material of the exemplary embodiment contains two or more triplet sensitizers and an organic luminescent material. The respective maximum absorption wavelengths $\lambda_{MAX}$(TS) of the two or more triplet sensitizers are different from each other. The lowest triplet energy of each of the two or more triplet sensitizers is equal to or larger than the lowest triplet energy of the organic luminescent material, and the lowest singlet energy of each of the two or more triplet sensitizers is smaller than the lowest singlet energy of the organic luminescent material.

Herein, the "maximum emission wavelength $\lambda_{MAX}$(EM) of the organic luminescent material" may be simply referred to as "$\lambda_{MAX}$(EM)," and the "maximum absorption wavelength $\lambda_{MAX}$(TS) of the triplet sensitizer" may be simply referred to as "$\lambda_{MAX}$(TS)." Herein, depending on the types of materials, for instance, the maximum absorption wavelengths $\lambda_{MAX}$(TS) of a first triplet sensitizer and a second triplet sensitizer may be referred to as $\lambda_{MAX}$(TS-1) and $\lambda_{MAX}$(TS-2), respectively, by adding branch numbers.

Herein, a solid-state emission spectrum refers to an emission spectrum measured for a sample in a solid state, and a solution absorption spectrum refers to an absorption spectrum measured for a sample in a solution state.

Herein, in the solution absorption spectrum measured using a solution obtained by dissolving a triplet sensitizer in a nonpolar solvent: one or more wavelengths, which are in a wavelength region longer than the maximum emission wavelength $\lambda_{MAX}$(EM) of the organic luminescent material and at which the absorbance is at a local maximum, are defined as "local maximum absorption wavelengths" of the triplet sensitizer (the local maximum absorption wavelengths may each be referred to as $\lambda_{LMAX}$(TS)). Among the local maximum absorption wavelengths $\lambda_{LMAX}$(TS), the wavelength at which the absorbance is at the maximum is the "maximum absorption wavelength" $\lambda_{MAX}$(TS) of the triplet sensitizer. Thus, for each of two or more triplet sensitizers, there is one maximum absorption wavelength, and there may be a plurality of local maximum absorption wavelengths including the maximum absorption wavelength. For instance, as illustrated in the spectra of Figs. 5A and 5B, each of the absorption spectrum of the PtOEP-containing solution and the absorption spectrum of the PtTPP-containing solution includes one maximum absorption wavelength and two local maximum absorption wavelengths.

The maximum emission wavelength $\lambda_{MAX}$(EM) of the organic luminescent material, the maximum absorption wavelength $\lambda_{MAX}$(TS) of the triplet sensitizer, and the lowest singlet energy and the lowest triplet energy can be measured by the method described in the section of Examples below.

In the organic solid upconversion material of the exemplary embodiment, the maximum absorption wavelength $\lambda_{MAX}$(TS) of each of the two or more triplet sensitizers in a wavelength region longer than the maximum emission wavelength $\lambda_{MAX}$(EM) of the organic luminescent material is preferably, for instance, in a wavelength region from 450 nm to 650 nm or a wavelength region from 480 to 650 nm.

The emission spectrum of the organic luminescent material in the organic solid upconversion material and the

maximum emission wavelength $\lambda_{MAX}$(EM) of the organic luminescent material can be measured by the method described in the section of Examples below.

In the exemplary embodiment, when one triplet sensitizer has a plurality of local maximum absorption wavelengths in a wavelength region longer than the maximum emission wavelength $\lambda_{MAX}$(EM) of the organic luminescent material, at least one of the plurality of local maximum absorption wavelengths, at which the absorption intensity is smaller than that of the maximum absorption wavelength $\lambda_{MAX}$(TS), is preferably different from the local maximum absorption wavelengths of the other triplet sensitizer(s).

Herein, upconversion may be simply referred to as "UC," and the organic solid upconversion material may be simply referred to as the "organic solid UC material."

In the organic solid upconversion material of the exemplary embodiment, each of the two or more triplet sensitizers in the organic solid UC material absorbs excitation light and is excited, and triplet excitons are generated through intersystem crossing from the lowest singlet state to the lowest triplet state. When the lowest triplet energy of each of the two or more triplet sensitizers in the organic solid UC material is equal to or larger than the lowest triplet energy of the organic luminescent material, the energy transfer of the triplet excitons easily occurs from the triplet sensitizers to the organic luminescent material. Triplet excitons of the organic luminescent material generated by the triplet-triplet energy transfer from the triplet sensitizers diffuse within the crystals of organic luminescent material molecules (triplet exciton diffusion) and collide with each other, resulting in triplet-triplet annihilation (TTA). As a result of TTA, singlet excitons of organic luminescent material molecules are generated. Since the lowest singlet energy of each of the two or more triplet sensitizers in the organic solid UC material is smaller than the lowest singlet energy of the organic luminescent material, the organic luminescent material, which has a larger lowest singlet energy than each of the two or more triplet sensitizers in the organic solid UC material, can emit light with a shorter wavelength than the light absorbed by each of the two or more triplet sensitizers in the organic solid UC material (upconversion).

Fig. 1 illustrates a conceptual diagram of an upconversion mechanism in an example of the organic solid upconversion material of the exemplary embodiment. The example of the organic solid upconversion material illustrated in Fig. 1 contains, as the two or more triplet sensitizers, the first triplet sensitizer and the second triplet sensitizer. It should be noted that, in the drawings, the molecular shapes of the first triplet sensitizer, the second triplet sensitizer, and the organic luminescent material are schematically illustrated for convenience of explanation and do not represent their actual molecular shapes. Accordingly, the first triplet sensitizer, the second triplet sensitizer, and the organic luminescent material are not limited to the illustrated shapes.

As illustrated in Fig. 1, the lowest triplet state $T_1$ of each of the first triplet sensitizer and the second triplet sensitizer is generated by intersystem crossing from the lowest singlet state $S_1$ excited by absorbing excitation light (e.g., visible light). Triplet-triplet energy transfer (TET) from the first triplet sensitizer and the second triplet sensitizer to the organic luminescent material occurs to generate the lowest triplet state $T_1$ of the organic luminescent material. When two organic luminescent material molecules in the lowest triplet state $T_1$ collide with each other, the lowest singlet state $S_1$ of the organic luminescent material is generated by TTA. Emission occurs from the lowest singlet state $S_1$ of the organic luminescent material, which is at a higher energy level than the lowest singlet state $S_1$ of the first triplet sensitizer and the second triplet sensitizer.

The organic solid upconversion material of the exemplary embodiment preferably contains, as the two or more triplet sensitizers, at least the first triplet sensitizer and the second triplet sensitizer.

In the organic solid upconversion material of the exemplary embodiment, the first triplet sensitizer, the second triplet sensitizer, and the organic luminescent material preferably satisfy relationships of numerical formulae (Numerical Formula 1), (Numerical Formula 2), and (Numerical Formula 3) below.

$$T_1(G1) \geq T_1(M3) \text{ ...(Numerical Formula 1)}$$

$$T_1(G2) \geq T_1(M3) \text{...(Numerical Formula 2)}$$

$$S_1(M3) > S_1(G2) > S_1(G1) \text{ ...(Numerical Formula 3)}$$

$S_1(G1)$ is the lowest singlet energy of the first triplet sensitizer;
$T_1(G1)$ is the lowest triplet energy of the first triplet sensitizer;
$S_1(G2)$ is the lowest singlet energy of the second triplet sensitizer;
$T_1(G2)$ is the lowest triplet energy of the second triplet sensitizer;
$S_1(M3)$ is the lowest singlet energy of the organic luminescent material; and
$T_1(M3)$ is the lowest triplet energy of the organic luminescent material.

Herein, a numerical formula represented by "$A \geq B$" means that the value of A is equal to the value of B, or the value of A is larger than the value of B.

Herein, a numerical formula represented by "$A \leq B$" means that the value of A is equal to the value of B, or the value of A is smaller than the value of B.

Fig. 2A is a schematic diagram of upconversion when an organic solid upconversion material containing a single triplet sensitizer (the first triplet sensitizer) and the organic luminescent material is irradiated with sunlight.

Fig. 2B is a schematic diagram of upconversion when an organic solid upconversion material containing another single triplet sensitizer (the second triplet sensitizer) and the organic luminescent material is irradiated with sunlight.

A typical organic solid UC material contains a single triplet sensitizer, and the width of the absorption band of each triplet sensitizer is narrow as illustrated in Figs. 2A and 2B. Therefore, in order to enhance the UC luminous intensity and the UC quantum efficiency, it has been considered to increase the concentration of the triplet sensitizer in the organic solid UC material and thereby increase an absorption amount of excitation light, which includes light having a wide wavelength range, such as sunlight. However, when the concentration of the triplet sensitizer in the organic solid UC material is increased, a portion of the triplet sensitizer that is not fully contained (or cannot be dissolved) in the crystal of the organic luminescent material precipitates, causing a decrease in the UC luminous intensity and the UC quantum efficiency.

Fig. 2C is a schematic diagram of upconversion when an organic solid upconversion material containing two triplet sensitizers (the first triplet sensitizer and the second triplet sensitizer) and the organic luminescent material is irradiated with sunlight. The maximum absorption wavelength $\lambda_{MAX}$(TS-1) of the first triplet sensitizer and the maximum absorption wavelength $\lambda_{MAX}$(TS-2) of the second triplet sensitizer, which are in a wavelength region longer than the maximum emission wavelength $\lambda_{MAX}$(EM) of the organic luminescent material, are different from each other. The fact that the maximum absorption wavelengths $\lambda_{MAX}$(TS) in a wavelength region longer than the maximum emission wavelength $\lambda_{MAX}$(EM) of the organic luminescent material are different from each other also implies that the respective absorption spectra of the two or more triplet sensitizers do not coincide with each other and have different absorption bands.

As in the organic solid UC material according to the exemplary embodiment, when the crystal of the organic luminescent material contains the two or more triplet sensitizers having the different maximum absorption wavelengths $\lambda_{MAX}$(TS) in a wavelength region longer than the maximum emission wavelength $\lambda_{MAX}$(EM) of the organic luminescent material, an absorption peak in an optical absorption spectrum of the organic solid UC material becomes wider, broadening the absorption band for excitation light such as sunlight, and increasing the absorption amount of the excitation light. As a result, the intensity of the generated UC light increases, and the UC quantum efficiency increases when sunlight or the like is used as excitation light.

Accordingly, the organic solid upconversion material of the exemplary embodiment exhibits a high upconversion luminous intensity for excitation light that includes light having a wide wavelength range, such as sunlight. In addition, in the organic solid upconversion material of the exemplary embodiment, since neither the two or more triplet sensitizers nor the organic luminescent material are ionic materials (ionic liquid), the organic solid upconversion material of the exemplary embodiment is also chemically stable.

According to an exemplary arrangement of the organic solid upconversion material of the exemplary embodiment, a high upconversion luminous intensity is exhibited with a low excitation light intensity and high durability to excitation light is also exhibited.

The organic solid upconversion material of the exemplary embodiment is applicable to various usages (e.g., photocatalysis, solar cells, and photo-organic synthesis).

In the organic solid upconversion material of the exemplary embodiment, the organic luminescent material is preferably in a crystalline form.

In the organic solid upconversion material of the exemplary embodiment, preferably, the organic luminescent material is in a crystalline form and contains (is doped with) the two or more triplet sensitizers in the crystal of the organic luminescent material.

In the organic solid upconversion material of the exemplary embodiment, preferably, the crystal structure of a solid solution crystal in which the two or more triplet sensitizers are dissolved maintains the crystal structure of the organic luminescent material alone. It can be confirmed by X-ray structure analysis that the crystal structure of the organic luminescent material alone is maintained.

In the organic solid upconversion material of the exemplary embodiment, the crystal of the organic luminescent material is preferably transparent and may be colorless transparent or colored transparent.

In the organic solid upconversion material of the exemplary embodiment, the two or more triplet sensitizers and the organic luminescent material preferably form a solid solution crystal. In the solid solution crystal of the organic solid upconversion material of the exemplary embodiment, it is preferable that the organic luminescent material be in a crystalline form and that two or more triplet sensitizers be dissolved in the crystal of the organic luminescent material. When the organic solid upconversion material of the exemplary embodiment is in the form of a solid solution crystal of the two or more triplet sensitizers and the organic luminescent material, the organic solid upconversion material is thermodynamically stable, and the two or more triplet sensitizers are stably dispersed at a molecular level in the solid of the organic

luminescent material at a high concentration without aggregation. For instance, the two or more triplet sensitizers and the organic luminescent material preferably form a solid solution crystal corresponding to an "$\alpha$ phase" illustrated in Fig. 3. In the thermodynamic equilibrium phase diagram illustrated in Fig. 3, a region indicated by a symbol A1 is a solid solution phase labeled as the "$\alpha$ phase," and the solid solution in the organic solid upconversion material of the exemplary embodiment corresponds to the $\alpha$ phase or a phase equivalent to the $\alpha$ phase. The $\alpha$ phase is a thermodynamically stable phase in which a small amount of the molecules of the triplet sensitizers is dissolved in the mother crystal of molecules of the organic luminescent material. The solid solubility limit of molecules of the triplet sensitizers to the crystal phase of molecules of the organic luminescent material can be known from the thermodynamic equilibrium phase diagram of a binary molecular mixture system related to the organic luminescent material molecules and triplet sensitizer molecules, as schematically illustrated in Fig. 3. Fig. 3 is a typical phase diagram in the simplest case and, in reality, even in a phase diagram slightly different from this, the mechanism by which the two or more triplet sensitizers and the organic luminescent material form a solid solution crystal is essentially established. When a molar ratio of the molecules of the organic luminescent material to the molecules of the triplet sensitizers is within a range that allows formation of a solid solution phase in which the molecules of the triplet sensitizers are dissolved in the mother crystal of the molecules of the organic luminescent material, the solid solution state can be maintained for a long period of time. It should be noted that the thermodynamic equilibrium phase diagram of a binary molecular mixture system can be prepared in accordance with, for instance, an experimental method for preparing a phase diagram, the method being commonly employed by those skilled in the art. The binary molecular mixture system may also be referred to as a eutectic system with limited miscibility.

In the organic solid upconversion material of the exemplary embodiment, when a wavelength at which the light absorption coefficient of each of the two or more triplet sensitizers in a solid-state absorption spectrum of the organic solid upconversion material is at a maximum in a wavelength region longer than the maximum emission wavelength $\lambda_{MAX}$(EM) of the organic luminescent material is defined as a maximum absorption wavelength $\lambda_{MAX}$(MC), a difference $\lambda_{MAX}$(MC) - $\lambda_{MAX}$(TS) between the maximum absorption wavelength $\lambda_{MAX}$(MC) and the maximum absorption wavelength $\lambda_{MAX}$(TS) in each of the two or more triplet sensitizers is preferably 10 nm or less, more preferably 5 nm or less. When the maximum absorption wavelength difference $\lambda_{MAX}$(MC) - $\lambda_{MAX}$(TS) is 10 nm or less in each of the two or more triplet sensitizers, aggregation of the triplet sensitizers in the solid solution crystal is suppressed, and the triplet sensitizers can be more stably dispersed at the molecular level.

Herein, the solid-state absorption spectrum refers to an absorption spectrum measured for a sample in the solid state.

The maximum absorption wavelength in the solution absorption spectrum and the light absorption coefficient in the solid-state absorption spectrum can be measured by the method described in the section of Examples below.

When the organic solid upconversion material of the exemplary embodiment contains, as the two or more triplet sensitizers, at least the first triplet sensitizer and the second triplet sensitizer, the respective maximum absorption wavelength differences $\lambda_{MAX}$(MC) - $\lambda_{MAX}$(TS) of the first triplet sensitizer and the second triplet sensitizer are represented by numerical formulae (Numerical Formula 4) and (Numerical Formula 5) below, respectively.

$$\lambda_{MAX}(MC\text{-}1) - \lambda_{MAX}(TS\text{-}1) \leq 10\text{nm} \quad \ldots\text{(Numerical Formula 4)}$$

$$\lambda_{MAX}(MC\text{-}2) - \lambda_{MAX}(TS\text{-}2) \leq 10\text{nm} \quad \ldots\text{(Numerical Formula 5)}$$

In the numerical formulae (Numerical Formula 4) and (Numerical Formula 5):

$\lambda_{MAX}$(TS-1) is a wavelength at which the absorbance is at a maximum in a wavelength region longer than the maximum emission wavelength $\lambda_{MAX}$(EM) of the organic luminescent material, in the solution absorption spectrum of the first triplet sensitizer;

$\lambda_{MAX}$(MC-1) is a wavelength at which the light absorption coefficient of the first triplet sensitizer is at a maximum in a wavelength region longer than the maximum emission wavelength $\lambda_{MAX}$(EM) of the organic luminescent material, in the solid-state absorption spectrum of the organic solid upconversion material;

$\lambda_{MAX}$(TS-2) is a wavelength at which the absorbance is at a maximum in a wavelength region longer than the maximum emission wavelength $\lambda_{MAX}$(EM) of the organic luminescent material, in the solution absorption spectrum of the second triplet sensitizer; and

$\lambda_{MAX}$(MC-2) is a wavelength at which the light absorption coefficient of the second triplet sensitizer is at a maximum in a wavelength region longer than the maximum emission wavelength $\lambda_{MAX}$(EM) of the organic luminescent material, in the solid-state absorption spectrum of the organic solid upconversion material.

In the organic solid upconversion material of the exemplary embodiment, it is also preferable that the first triplet sensitizer satisfy a relationship of a numerical formula (Numerical Formula 4-1) below.

$$\lambda_{MAX}(MC\text{-}1) - \lambda_{MAX}(TS\text{-}1) \leq 5nm \ldots(\text{Numerical Formula 4-1})$$

In the organic solid upconversion material of the exemplary embodiment, it is also preferable that the second triplet sensitizer satisfy a relationship of a numerical formula (Numerical Formula 5-1) below.

$$\lambda_{MAX}(MC\text{-}2) - \lambda_{MAX}(TS\text{-}2) \leq 5nm \ldots(\text{Numerical Formula 5-1})$$

Herein, the phrase that the triplet sensitizers are dissolved in the crystal of the organic luminescent material means that the above-described difference $\lambda_{MAX}(MC) - \lambda_{MAX}(TS)$ is 10 nm or less.
It can be confirmed by X-ray structure analysis that the organic solid upconversion material is a single crystal.
In the organic solid upconversion material of the exemplary embodiment, a molar volume of the organic luminescent material is preferably 360 $cm^3$/mol or more, more preferably 400 $cm^3$/mol or more, and still more preferably 450 $cm^3$/mol or more. When the molar volume of the organic luminescent material is 360 $cm^3$/mol or more, the two or more triplet sensitizers can be dissolved in the crystal of the organic luminescent material in a larger amount.
In the organic solid upconversion material of the exemplary embodiment, the molar volume of the organic luminescent material is preferably 5,000 $cm^3$/mol or less. When the molar volume of the organic luminescent material is 5,000 $cm^3$/mol or less, an energy transfer efficiency from the two or more triplet sensitizers to the organic luminescent material can be increased.
The molar volume of the organic luminescent material in the organic solid upconversion material can be calculated by single-crystal X-ray structure analysis and more specifically calculated by the method described in the section of Examples below.
A total molar concentration of the two or more triplet sensitizers in the organic solid upconversion material of the exemplary embodiment is preferably $2.0 \times 10^{-5}$ mol/L or more, more preferably $5.0 \times 10^{-5}$ mol/L or more, and still more preferably $6.0 \times 10^{-5}$ mol/L or more. When the total molar concentration of the two or more triplet sensitizers is $2.0 \times 10^{-5}$ mol/L or more, the two or more triplet sensitizers can be dissolved in the crystal of the organic luminescent material in a larger amount, making it easier to improve the upconversion luminous intensity and the upconversion quantum efficiency.
The total molar concentration of the two or more triplet sensitizers in the organic solid upconversion material of the exemplary embodiment is preferably $1.0 \times 10^{-2}$ mol/L or less. When the total molar concentration of the triplet sensitizers relative to the organic luminescent material is $1.0 \times 10^{-2}$ mol/L or less, it is possible to prevent aggregation of the triplet sensitizers due to an excessively high concentration and to prevent a decrease in the upconversion luminous intensity and the upconversion quantum efficiency due to precipitation of the triplet sensitizers on the surface of the upconversion material.
The molar concentration of each of the two or more triplet sensitizers in the organic solid upconversion material of the exemplary embodiment is preferably in a range from $1.0 \times 10^{-5}$ mol/L to $5.0 \times 10^{-3}$ mol/L.
The molar concentration of each triplet sensitizer being $1.0 \times 10^{-5}$ mol/L or more enables transmittance measurement of the optical absorption spectrum of the triplet sensitizer even when the organic solid upconversion material is an organic luminescent material crystal having a thickness of about 100 $\mu$m.
The molar concentration of each triplet sensitizer being $5.0 \times 10^{-3}$ mol/L or less is capable of preventing the excessively high concentration of the triplet sensitizers in the organic solid upconversion material and also suppressing deactivation of excitons due to the molecules of the triplet sensitizers.
The molar concentration of the triplet sensitizers in the organic solid upconversion material can be measured by the method described in the section of Examples below.
A molar ratio of the organic luminescent material to the triplet sensitizers (organic luminescent material : triplet sensitizers) in the organic solid upconversion material of the exemplary embodiment is preferably 1,000:1 to 500,000:1, more preferably 1,000:1 to 100,000:1, and still more preferably 1,000:1 to 70,000:1.
When the molar ratio of the organic luminescent material to the triplet sensitizers is in a range of 1,000:1 to 500,000:1, the triplet sensitizers can be dissolved in the crystal of the organic luminescent material in a larger amount, making it easier to improve the upconversion quantum efficiency.
The molar ratio of the organic luminescent material to the triplet sensitizers can be calculated by the method described in the section of Examples below.
Herein, a numerical range expressed using, for instance, "AA to BB" means a range including the numerical value AA given before " to " of "AA to BB" as the lower limit value and the numerical value BB given after " to " of "AA to BB" as the upper limit value.
The triplet excitation lifetime of the organic solid upconversion material of the exemplary embodiment is preferably 0.2 ms or more, more preferably 1 ms or more, still more preferably 2 ms or more, and still further more preferably 3 ms or more. When the triplet excitation lifetime of the organic solid upconversion material is 0.2 ms or more, the collision probability between triplet excitons is improved, and the efficiency of TTA is also improved.

The triplet excitation lifetime of the organic solid upconversion material of the exemplary embodiment is preferably 100 ms or less, more preferably 50 ms or less. When the triplet excitation lifetime of the organic solid upconversion material is 100 ms or less, deactivation of triplet excitons by heat or oxygen can be suppressed.

The triplet excitation lifetime of the organic solid upconversion material can be measured by the method described in the section of Examples below.

The organic solid upconversion material of the exemplary embodiment preferably contains no polymer compound. The polymer compound is, for instance, a compound having a molecular weight of 10,000 or more. Examples of the polymer compound include a polymer. Preferably, neither the triplet sensitizers nor the organic luminescent material are polymer compounds.

The sum of the content of the triplet sensitizers and the content of the organic luminescent material in the organic solid upconversion material of the exemplary embodiment is preferably 90 mass% or more, more preferably 95 mass% or more, still more preferably 99 mass% or more, and still further more preferably 99.9 mass% or more.

Preferably, the organic solid upconversion material of the exemplary embodiment substantially consists of only the two or more triplet sensitizers and the organic luminescent material. The phrase "substantially consists of only the two or more triplet sensitizers and the organic luminescent material" means that a minute amount of impurities or the like derived from a raw material for forming the organic solid upconversion material is inevitably mixed.

The content of an organic solvent in the organic solid upconversion material according to the exemplary embodiment is preferably 1 mass% or less, more preferably 0.1 mass% or less, and still more preferably 0.01 mass% or less. The organic solid upconversion material according to the exemplary embodiment preferably contains no organic solvent. Organic solvents are volatile, flammable, and biologically toxic. Therefore, as the content of the organic solvent in the film becomes lower, the organic solid upconversion material becomes safer and more stable and more easily applied to environmentally friendly applications.

Organic Luminescent Material

In the organic solid upconversion material of the exemplary embodiment, the organic luminescent material preferably contains in a molecule only a hydrogen atom, a carbon atom, an oxygen atom, and a nitrogen atom.

In the organic solid upconversion material of the exemplary embodiment, the organic luminescent material preferably contains no metal atom in a molecule. Use of the organic luminescent material containing no metal atom can avoid generation of environmental pollution due to metal in the production and disposal of the organic solid upconversion material.

In the organic solid upconversion material of the exemplary embodiment, the organic luminescent material is preferably an anthracene derivative. When the organic luminescent material is an anthracene derivative, the upconversion luminous intensity and the upconversion quantum efficiency can be more easily improved.

In the organic solid upconversion material of the exemplary embodiment, the anthracene derivative serving as the organic luminescent material is preferably a compound in which substituents having structures different from each other (preferably substituted or unsubstituted aryl groups different from each other) are bonded to the 9-position carbon atom and the 10-position carbon atom of the anthracene ring. Herein, a compound having substituents having structures different from each other at the 9-position carbon atom and the 10-position carbon atom of the anthracene ring may be referred to as an asymmetric anthracene compound. When the anthracene derivative serving as the organic luminescent material is an asymmetric anthracene compound, the two or more triplet sensitizers are easily doped (preferably dissolved) in the crystal structure of the organic luminescent material.

In the organic solid upconversion material of the exemplary embodiment, the organic luminescent material is preferably a compound represented by a formula (10) below or a compound represented by a formula (11) below.

[Formula 5]

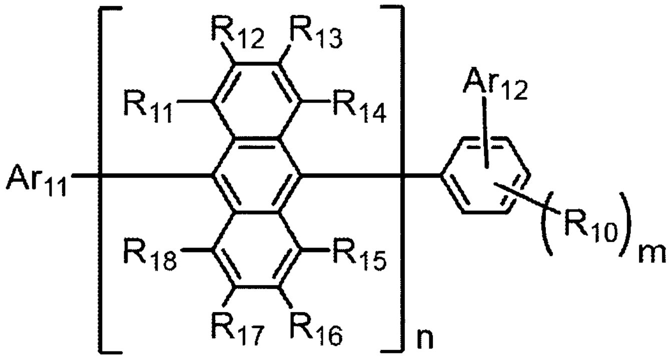

(10)

In the formula (10):

$Ar_{11}$ is a substituted or unsubstituted fused aryl group having 10 to 50 ring carbon atoms;
$Ar_{12}$ is a substituted or unsubstituted aryl group having 6 to 50 ring carbon atoms;
$R_{10}$ to $R_{18}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a carboxy group, a halogen atom, a cyano group, a nitro group, or a hydroxy group;
m is 4, and four $R_{10}$ are mutually the same or different;
n is 1, 2, or 3; and
when n is 2 or 3, groups represented by a formula (10a) below in the compound represented by the formula (10) are mutually the same or different, and each * represents a bonding position.

[Formula 6]

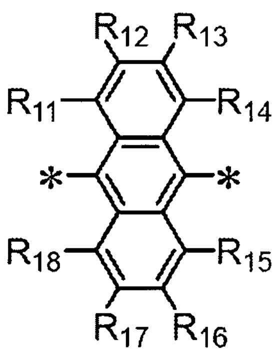

(10a)

[Formula 7]

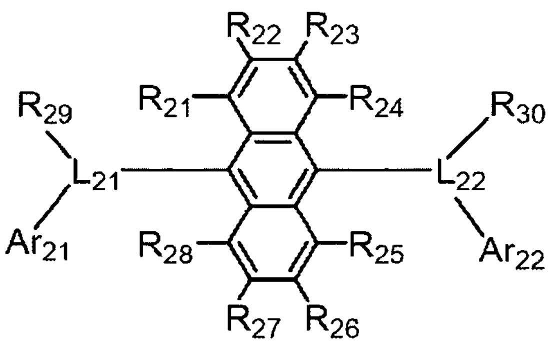

(11)

In the formula (11):

$L_{21}$ and $L_{22}$ are each independently a substituted or unsubstituted fused aryl group having 10 to 20 ring carbon atoms;
$Ar_{21}$ and $Ar_{22}$ are each independently a hydrogen atom or a substituted or unsubstituted aryl group having 6 to 50 ring carbon atoms;
$R_{21}$ to $R_{30}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a substituted or unsubstituted silyl group, a carboxy group, a halogen atom, a cyano group, a nitro group, or a hydroxy group;
a plurality of $Ar_{21}$, a plurality of $Ar_{22}$, a plurality of $R_{29}$, and a plurality of $R_{30}$ may be present;
a combination of adjacent two or more of $Ar_{21}$ and $R_{29}$ are mutually bonded to form a substituted or unsubstituted monocyclic ring, mutually bonded to form a substituted or unsubstituted fused ring, or not mutually bonded;
a combination of adjacent two or more of $Ar_{22}$ and $R_{30}$ are mutually bonded to form a substituted or unsubstituted monocyclic ring, mutually bonded to form a substituted or unsubstituted fused ring, or not mutually bonded; and
a group represented by a formula (11a) below and a group represented by a formula (11b) below in the compound represented by the formula (11) are mutually different, and each * represents a bonding position.

[Formula 8]

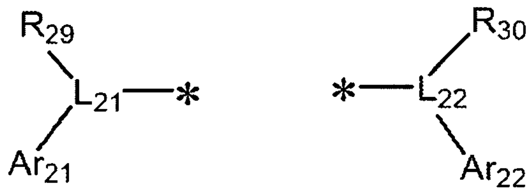

(11a) (11b)

Examples of each substituent in the formula (10) or (11) include substituents disclosed in International Publication No. WO 2004/018587 and International Publication No. WO 2005/061656.

Examples of the substituted or unsubstituted fused aryl group having 10 to 50 ring carbon atoms include 1-naphthyl group, 2-naphthyl group, 1-anthryl group, 2-anthryl group, 9-anthryl group, 1-phenanthryl group, 2-phenanthryl group, 3-phenanthryl group, 4-phenanthryl group, 9-phenanthryl group, 1-naphthacenyl group, 2-naphthacenyl group, 9-naphthacenyl group, 1-pyrenyl group, 2-pyrenyl group, 4-pyrenyl group, 3-methyl-2-naphthyl group, 4-methyl-1-naphthyl group, and 4-methyl-1-anthryl group.

Examples of the substituted or unsubstituted aryl group having 6 to 50 ring carbon atoms include a phenyl group, 1-naphthyl group, 2-naphthyl group, 1-anthryl group, 2-anthryl group, 9-anthryl group, 1-phenanthryl group, 2-phenanthryl group, 3-phenanthryl group, 4-phenanthryl group, 9-phenanthryl group, 1-naphthacenyl group, 2-naphthacenyl group, 9-naphthacenyl group, 1-pyrenyl group, 2-pyrenyl group, 4-pyrenyl group, 2-biphenylyl group, 3-biphenylyl group, 4-biphenylyl group, p-terphenyl-4-yl group, p-terphenyl-3-yl group, p-terphenyl-2-yl group, m-terphenyl-4-yl group, m-terphenyl-3-yl group, m-terphenyl-2-yl group, o-tolyl group, m-tolyl group, p-tolyl group, p-t-butylphenyl group, p-(2-phenylpropyl)phenyl group, 3-methyl-2-naphthyl group, 4-methyl-1-naphthyl group, 4-methyl-1-anthryl group, 4'-methylbiphenylyl group, and 4''-t-butyl-p-terphenyl-4-yl group.

Examples of the substituted or unsubstituted heterocyclic group having 5 to 50 ring atoms include a 1-pyrrolyl group, 2-pyrrolyl group, 3-pyrrolyl group, pyrazinyl group, 2-pyridinyl group, 3-pyridinyl group, 4-pyridinyl group, 1-indolyl group, 2-indolyl group, 3-indolyl group, 4-indolyl group, 5-indolyl group, 6-indolyl group, 7-indolyl group, 1-isoindolyl group, 2-isoindolyl group, 3-isoindolyl group, 4-isoindolyl group, 5-isoindolyl group, 6-isoindolyl group, 7-isoindolyl group, 2-furyl group, 3-furyl group, 2-benzofuranyl group, 3-benzofuranyl group, 4-benzofuranyl group, 5-benzofuranyl group, 6-benzofuranyl group, 7-benzofuranyl group, 1-isobenzofuranyl group, 3-isobenzofuranyl group, 4-isobenzofuranyl group, 5-isobenzofuranyl group, 6-isobenzofuranyl group, 7-isobenzofuranyl group, quinolyl group, 3-quinolyl group, 4-quinolyl group, 5-quinolyl group, 6-quinolyl group, 7-quinolyl group, 8-quinolyl group, 1-isoquinolyl group, 3-isoquinolyl group, 4-isoquinolyl group, 5-isoquinolyl group, 6-isoquinolyl group, 7-isoquinolyl group, 8-isoquinolyl group, 2-quinoxalinyl group, 5-quinoxalinyl group, 6-quinoxalinyl group, 1-carbazolyl group, 2-carbazolyl group, 3-carbazolyl group, 4-carbazolyl group, 9-carbazolyl group, 1-phenanthridinyl group, 2-phenanthridinyl group, 3-phenanthridinyl group, 4-phenanthridinyl

group, 6-phenanthridinyl group, 7-phenanthridinyl group, 8-phenanthridinyl group, 9-phenanthridinyl group, 10-phenanthridinyl group, 1-acridinyl group, 2-acridinyl group, 3-acridinyl group, 4-acridinyl group, 9-acridinyl group, 1,7-phenanthrolin-2-yl group, 1,7-phenanthrolin-3-yl group, 1,7-phenanthrolin-4-yl group, 1,7-phenanthrolin-5-yl group, 1,7-phenanthrolin-6-yl group, 1,7-phenanthrolin-8-yl group, 1,7-phenanthrolin-9-yl group, 1,7-phenanthrolin-10-yl group, 1,8-phenanthrolin-2-yl group, 1,8-phenanthrolin-3-yl group, 1,8-phenanthrolin-4-yl group, 1,8-phenanthrolin-5-yl group, 1,8-phenanthrolin-6-yl group, 1,8-phenanthrolin-7-yl group, 1,8-phenanthrolin-9-yl group, 1,8-phenanthrolin-10-yl group, 1,9-phenanthrolin-2-yl group, 1,9-phenanthrolin-3-yl group, 1,9-phenanthrolin-4-yl group, 1,9-phenanthrolin-5-yl group, 1,9-phenanthrolin-6-yl group, 1,9-phenanthrolin-7-yl group, 1,9-phenanthrolin-8-yl group, 1,9-phenanthrolin-10-yl group, 1,10-phenanthrolin-2-yl group, 1,10-phenanthrolin-3-yl group, 1,10-phenanthrolin-4-yl group, 1,10-phenanthrolin-5-yl group, 2,9-phenanthrolin-1-yl group, 2,9-phenanthrolin-3-yl group, 2,9-phenanthrolin-4-yl group, 2,9-phenanthrolin-5-yl group, 2,9-phenanthrolin-6-yl group, 2,9-phenanthrolin-7-yl group, 2,9-phenanthrolin-8-yl group, 2,9-phenanthrolin-10-yl group, 2,8-phenanthrolin-1-yl group, 2,8-phenanthrolin-3-yl group, 2,8-phenanthrolin-4-yl group, 2,8-phenanthrolin-5-yl group, 2,8-phenanthrolin-6-yl group, 2,8-phenanthrolin-7-yl group, 2,8-phenanthrolin-9-yl group, 2,8-phenanthrolin-10-yl group, 2,7-phenanthrolin-1-yl group, 2,7-phenanthrolin-3-yl group, 2,7-phenanthrolin-4-yl group, 2,7-phenanthrolin-5-yl group, 2,7-phenanthrolin-6-yl group, 2,7-phenanthrolin-8-yl group, 2,7-phenanthrolin-9-yl group, 2,7-phenanthrolin-10-yl group, 1-phenazinyl group, 2-phenazinyl group, 1-phenothiazinyl group, 2-phenothiazinyl group, 3-phenothiazinyl group, 4-phenothiazinyl group, 10-phenothiazinyl group, 1-phenoxazinyl group, 2-phenoxazinyl group, 3-phenoxazinyl group, 4-phenoxazinyl group, 10-phenoxazinyl group, 2-oxazolyl group, 4-oxazolyl group, 5-oxazolyl group, 2-oxadiazolyl group, 5-oxadiazolyl group, 3-furazanyl group, 2-thienyl group, 3-thienyl group, 2-methylpyrrol-1-yl group, 2-methylpyrrol-3-yl group, 2-methylpyrrol-4-yl group, 2-methylpyrrol-5-yl group, 3-methylpyrrol-1-yl group, 3-methylpyrrol-2-yl group, 3-methylpyrrol-4-yl group, 3-methylpyrrol-5-yl group, 2-t-butylpyrrol-4-yl group, 3-(2-phenylpropyl)pyrrol-1-yl group, 2-methyl-1-indolyl group, 4-methyl-1-indolyl group, 2-methyl-3-indolyl group, 4-methyl-3-indolyl group, 2-t-butyl 1-indolyl group, 4-t-butyl 1-indolyl group, 2-t-butyl 3-indolyl group, and 4-t-butyl 3-indolyl group.

Examples of the substituted or unsubstituted alkyl group having 1 to 50 carbon atoms include a methyl group, ethyl group, propyl group, isopropyl group, n-butyl group, s-butyl group, isobutyl group, t-butyl group, n-pentyl group, n-hexyl group, n-heptyl group, n-octyl group, hydroxymethyl group, 1-hydroxyethyl group, 2-hydroxyethyl group, 2-hydroxyisobutyl group, 1,2-dihydroxyethyl group, 1,3-dihydroxyisopropyl group, 2,3-dihydroxy-t-butyl group, 1,2,3-trihydroxypropyl group, chloromethyl group, 1-chloroethyl group, 2-chloroethyl group, 2-chloroisobutyl group, 1,2-dichloroethyl group, 1,3-dichloroisopropyl group, 2,3-dichloro-t-butyl group, 1,2,3-trichloropropyl group, bromomethyl group, 1-bromoethyl group, 2-bromoethyl group, 2-bromoisobutyl group, 1,2-dibromoethyl group, 1,3-dibromoisopropyl group, 2,3-dibromo-t-butyl group, 1,2,3-tribromopropyl group, iodomethyl group, 1-iodoethyl group, 2-iodoethyl group, 2-iodoisobutyl group, 1,2-diiodoethyl group, 1,3-diiodoisopropyl group, 2,3-diiodo-t-butyl group, 1,2,3-triiodopropyl group, aminomethyl group, 1-aminoethyl group, 2-aminoethyl group, 2-aminoisobutyl group, 1,2-diaminoethyl group, 1,3-diaminoisopropyl group, 2,3-diamino-t-butyl group, 1,2,3-triaminopropyl group, cyanomethyl group, 1-cyanoethyl group, 2-cyanoethyl group, 2-cyanoisobutyl group, 1,2-dicyanoethyl group, 1,3-dicyanoisopropyl group, 2,3-dicyano-t-butyl group, 1,2,3-tricyanopropyl group, nitromethyl group, 1-nitroethyl group, 2-nitroethyl group, 2-nitroisobutyl group, 1,2-dinitroethyl group, 1,3-dinitroisopropyl group, 2,3-dinitro-t-butyl group, and 1,2,3-trinitropropyl group.

Examples of the substituted or unsubstituted cycloalkyl group having 3 to 50 ring carbon atoms include a cyclopropyl group, cyclobutyl group, cyclopentyl group, cyclohexyl group, 4-methylcyclohexyl group, 1-adamantyl group, 2-adamantyl group, 1-norbornyl group, and 2-norbornyl group.

The substituted or unsubstituted alkoxy group having 1 to 50 carbon atoms is a group represented by $-OY_1$. Examples of $Y_1$ are the same as the examples of a substituted or unsubstituted alkyl group having 1 to 50 carbon atoms.

Examples of the substituted or unsubstituted aralkyl group having 7 to 50 carbon atoms include a benzyl group, 1-phenylethyl group, 2-phenylethyl group, 1-phenylisopropyl group, 2-phenylisopropyl group, phenyl-t-butyl group, α-naphthylmethyl group, 1-α-naphthylethyl group, 2-α-naphthylethyl group, 1-α-naphthylisopropyl group, 2-α-naphthylisopropyl group, β-naphthylmethyl group, 1-β-naphthylethyl group, 2-β-naphthylethyl group, 1-β-naphthylisopropyl group, 2-β-naphthylisopropyl group, 1-pyrrolylmethyl group, 2-(1-pyrrolyl)ethyl group, p-methylbenzyl group, m-methylbenzyl group, o-methylbenzyl group, p-chlorobenzyl group, m-chlorobenzyl group, o-chlorobenzyl group, p-bromobenzyl group, m-bromobenzyl group, o-bromobenzyl group, p-iodobenzyl group, m-iodobenzyl group, o-iodobenzyl group, p-hydroxybenzyl group, m-hydroxybenzyl group, o-hydroxybenzyl group, p-aminobenzyl group, m-aminobenzyl group, o-aminobenzyl group, p-nitrobenzyl group, m-nitrobenzyl group, o-nitrobenzyl group, p-cyanobenzyl group, m-cyanobenzyl group, o-cyanobenzyl group, 1-hydroxy-2-phenylisopropyl group, and 1-chloro-2-phenylisopropyl group.

The substituted or unsubstituted aryloxy group having 6 to 50 ring carbon atoms is a group represented by $-OY_2$. Examples of $Y_2$ are the same as the examples of the substituted or unsubstituted aryl group having 6 to 50 ring carbon atoms and the substituted or unsubstituted heterocyclic group having 5 to 50 ring atoms.

The substituted or unsubstituted arylthio group having 6 to 50 ring carbon atoms is a group represented by $-SY_3$. Examples of $Y_3$ are the same as the examples of the substituted or unsubstituted aryl group having 6 to 50 ring carbon atoms and the substituted or unsubstituted heterocyclic group having 5 to 50 ring atoms.

The substituted or unsubstituted alkoxycarbonyl group having 1 to 50 carbon atoms is a group represented by -COOZ. Examples of Z are the same as the examples of the substituted or unsubstituted alkyl group having 1 to 50 carbon atoms.

The substituted or unsubstituted silyl group is a group represented by - $Si(Rx_1)(Rx_2)(Rx_3)$, and $Rx_1$,$Rx_2$, and $Rx_3$ are each independently a hydrogen atom, a substituted or unsubstituted aryl group having 6 to 50 ring carbon atoms, or a substituted or unsubstituted heterocyclic group having 5 to 50 ring atoms. Examples of the substituted or unsubstituted aryl group having 6 to 50 ring carbon atoms and the substituted or unsubstituted heterocyclic group having 5 to 50 ring atoms for $R_{x1}$ to $R_{x3}$ are the same as the examples described above.

Examples of a halogen atom include a fluorine atom, chlorine atom, bromine atom, and iodine atom.

In the formula (10) or (11), the groups specified to be "substituted or unsubstituted" are each preferably an "unsubstituted" group.

In the organic solid upconversion material of the exemplary embodiment, specific examples of the anthracene derivative as the organic luminescent material include the following compounds; however, the invention is not limited to the following compounds.

[Formula 9]

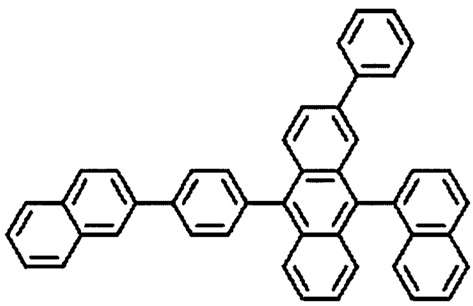

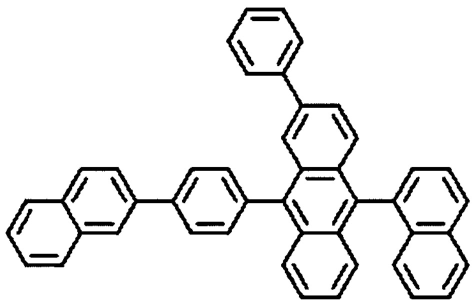

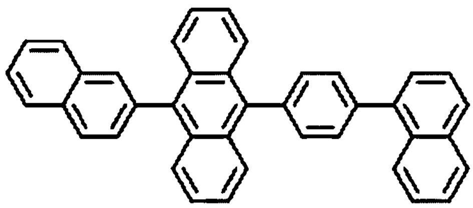

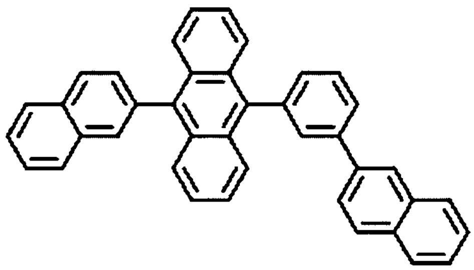

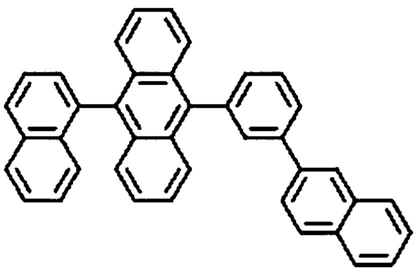

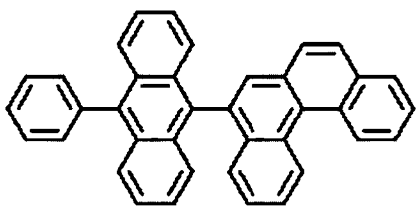

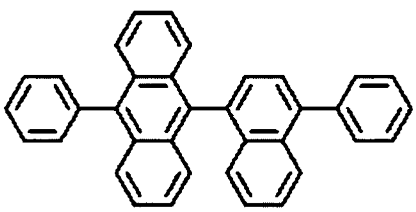

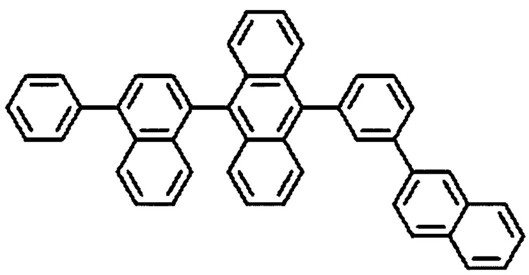

In the organic solid upconversion material of the exemplary embodiment, the organic luminescent material may be, for instance, at least one compound selected from the group consisting of an oxazole derivative, thiazole derivative, fluorene derivative, dibenzofuran derivative, and dibenzothiophene derivative.

In the organic solid upconversion material of the exemplary embodiment, the organic luminescent material is preferably a compound having the maximum emission wavelength $\lambda_{MAX}(EM)$ in, for instance, a wavelength region from 430 nm to 490 nm or a wavelength region from 440 nm to 480 nm.

In the organic solid upconversion material of the exemplary embodiment, it is also preferable that the maximum absorption wavelength $\lambda_{MAX}(TS)$ of each triplet sensitizer and the maximum emission wavelength $\lambda_{MAX}(EM)$ of the organic luminescent material satisfy a relationship of a numerical formula (Numerical Formula 6), (Numerical Formula 6-1), or (Numerical Formula 6-2) below.

$$\lambda_{MAX}(TS) - \lambda_{MAX}(EM) \geq 10nm \text{ …(Numerical Formula 6)}$$

$$\lambda_{MAX}(TS) - \lambda_{MAX}(EM) \geq 30nm \text{ …(Numerical Formula 6-1)}$$

$$\lambda_{MAX}(TS) - \lambda_{MAX}(EM) \geq 50nm \text{ …(Numerical Formula 6-2)}$$

In the numerical formulae (Numerical Formula 6), (Numerical Formula 6-1), and (Numerical Formula 6-2), the units of $\lambda_{MAX}(EM)$ and $\lambda_{MAX}(TS)$ are nm.

Triplet Sensitizer

In the organic solid upconversion material of the exemplary embodiment, the two or more triplet sensitizers are each a material that absorbs excitation light and generates excited triplet excitons.

In the organic solid upconversion material of the exemplary embodiment, the two or more triplet sensitizers are preferably each independently a compound having the local maximum absorption wavelength $\lambda_{LMAX}(TS)$ (preferably the maximum absorption wavelength $\lambda_{MAX}(TS)$) within the wavelength range of sunlight. As the triplet sensitizer, a compound having the local maximum absorption wavelength $\lambda_{LMAX}(TS)$ (preferably the maximum absorption wavelength $\lambda_{MAX}(TS)$) in a range from 200 nm to 1,000 nm is usually used. It is preferable that at least one of the two or more triplet sensitizers contained in the organic solid upconversion material of the exemplary embodiment have the local maximum absorption wavelength $\lambda_{LMAX}(TS)$ (preferably the maximum absorption wavelength $\lambda_{MAX}(TS)$) in a range from 400 nm to 700 nm or in a range from 500 nm to 700 nm. It is also preferable that the two or more triplet sensitizers contained in the organic solid upconversion material of the exemplary embodiment each independently have the local maximum absorption wavelength $\lambda_{LMAX}(TS)$ (preferably the maximum absorption wavelength $\lambda_{MAX}(TS)$) in a range from 400 nm to 700 nm or in a range from 500 nm to 700 nm. When the local maximum absorption wavelengths of the triplet sensitizers are within the above range, light with a relatively long wavelength that is not utilized in typical light-secondary energy conversion elements (elements for converting light into secondary energy), such as a solar cell and a hydrogen generation photocatalyst, can be converted into light with a relatively short wavelength that is utilized in such typical light-secondary energy conversion elements. Since the organic solid upconversion material of the exemplary embodiment contains the two or more triplet sensitizers having the different maximum absorption wavelengths $\lambda_{MAX}(TS)$ in a wavelength region longer than the maximum emission wavelength $\lambda_{MAX}(EM)$ of the organic luminescent material, the absorption band for excitation light is broadened, enabling, for instance, light having a wide wavelength range included in sunlight to be effectively utilized in light-secondary energy conversion elements. In the organic solid upconversion material of the exemplary embodiment, in order to effectively utilize light with wavelengths in the blue, violet, and ultraviolet regions, at least one of the two or more triplet sensitizers contained in the organic solid upconversion material may be a compound having the local maximum absorption wavelength $\lambda_{LMAX}(TS)$ (preferably the maximum absorption wavelength $\lambda_{MAX}(TS)$) in a range from 250 nm to 499 nm.

In the exemplary embodiment, among the maximum absorption wavelengths $\lambda_{MAX}(TS)$ of the two or more triplet sensitizers, a wavelength closest to a long-wavelength region is defined as a maximum absorption wavelength $\lambda_{LWMAX}(TS)$, and a wavelength closest to a short-wavelength region is defined as a maximum absorption wavelength $\lambda_{SWMAX}(TS)$. In this case, a difference $\Delta\lambda_{MAX}$ between the maximum absorption wavelength $\lambda_{LWMAX}(TS)$ and the maximum absorption wavelength $\lambda_{SWMAX}(TS)$ is preferably in a range from 10 nm to 120 nm. The difference $\Delta\lambda_{MAX}$ is more preferably 15 nm or more, still more preferably 20 nm or more. The difference $\Delta\lambda_{MAX}$ is more preferably 100 nm or less.

The difference $\Delta\lambda_{MAX}$ of 10 nm or more enables a broader optical absorption band of the organic solid UC material to be more easily obtained.

The difference $\Delta\lambda_{MAX}$ of 120 nm or less makes it easier to prevent gaps from occurring between the optical absorption bands of the respective triplet sensitizers in the organic solid UC material.

An organic solid upconversion material is exemplified below that contains the first triplet sensitizer and the second triplet sensitizer having the following local maximum absorption wavelengths and maximum absorption wavelengths, in a wavelength region longer than the maximum emission wavelength $\lambda_{MAX}$(EM) of the organic luminescent material.

First Triplet Sensitizer

Local maximum absorption wavelength $\lambda_{LMAX}$(TS-1): 510 nm and 560 nm
Maximum absorption wavelength $\lambda_{MAX}$(TS-1): 560 nm

Second Triplet Sensitizer

Local maximum absorption wavelength $\lambda_{LMAX}$(TS-2): 520 nm and 550 nm
Maximum absorption wavelength $\lambda_{MAX}$(TS-2): 520 nm

In this example, the maximum absorption wavelength $\lambda_{LWMAX}$(TS) closest to a long-wavelength region is 560 nm, the maximum absorption wavelength $\lambda_{SWMAX}$(TS) closest to a short-wavelength region is 520 nm, and the difference $\Delta\lambda_{MAX}$ is 40 nm ($\lambda_{LWMAX}$ - $\lambda_{SWMAX}$ = 560 nm - 520 nm = 40 nm).

As for the triplet sensitizers, even molecular species that have not hitherto been called dyes can also be used as long as they are compounds having light absorption in a range from the ultraviolet region to the infrared region. The triplet sensitizers used in the organic solid upconversion material of the exemplary embodiment are preferably, for instance, selected from the group consisting of compounds given below as triplet sensitizers.

Examples of the triplet sensitizers include acenaphthene derivatives, acetophenone derivatives, anthracene derivatives, diphenylacetylene derivatives, acridan derivatives, acridine derivatives, acridone derivatives, thioacridone derivatives, angelicin derivatives, anthracene derivatives, anthraquinone derivatives, azafluorene derivatives, azulene derivatives, benzyl derivatives, carbazole derivatives, coronene derivatives, sumanene derivatives, biphenylene derivatives, fluorene derivatives, perylene derivatives, phenanthrene derivatives, phenanthroline derivatives, phenazine derivatives, benzophenone derivatives, pyrene derivatives, benzoquinone derivatives, biacetyl derivatives, bianthranyl derivatives, fullerene derivatives, graphene derivatives, carotene derivatives, chlorophyll derivatives, chrysene derivatives, cinnoline derivatives, coumarin derivatives, curcumin derivatives, dansylamide derivatives, flavone derivatives, fluorenone derivatives, fluorescein derivatives, helicene derivatives, indene derivatives, lumichrome derivatives, lumiflavin derivatives, oxadiazole derivatives, oxazole derivatives, periflanthene derivatives, phenol derivatives, phenothiazine derivatives, phenoxazine derivatives, phthalazine derivatives, phthalocyanine derivatives, picene derivatives, porphyrin derivatives, porphycene derivatives, hemiporphycene derivatives, subphthalocyanine derivatives, psoralen derivatives, angelicin derivatives, purine derivatives, pyrene derivatives, pyromethene derivatives, pyridyl ketone derivatives, phenyl ketone derivatives, pyridyl ketone derivatives, thienyl ketone derivatives, furanyl ketone derivatives, quinazoline derivatives, quinoline derivatives, quinoxaline derivatives, retinal derivatives, retinol derivatives, rhodamine derivatives, riboflavin derivatives, rubrene derivatives, squaline derivatives, stilbene derivatives, tetracene derivatives, pentacene derivatives, anthraquinone derivatives, tetracenequinone derivatives, pentacenequinone derivatives, thiophosgene derivatives, indigo derivatives, thioindigo derivatives, thioxanthene derivatives, thymine derivatives, triphenylene derivatives, triphenylmethane derivatives, triaryl derivatives, tryptophan derivatives, uracil derivatives, xanthene derivatives, ferrocene derivatives, azulene derivatives, biacetyl derivatives, terphenyl derivatives, terfuran derivatives, terthiophene derivatives, oligoaryl derivatives, fullerene derivatives, conjugated polyene derivatives, group 14 element-containing fused polycyclic aromatic compound derivatives, and fused polycyclic hetero aromatic compound derivatives. The triplet sensitizers are not limited to those described above.

Specific examples of the triplet sensitizers include metalloporphyrins (metal complexes of porphyrins); metallotetraazaporphyrins (metal complexes of tetraazaporphyrins); metallophthalocyanines (metal complexes of phthalocyanines); an iodine derivative of 3,5-dimethyl-boron dipyrromethene; boron dipyrromethenes such as an iodine derivative of 3,5-dimethyl-8-phenylboron dipyrromethene; Schiff base metal complexes such as salen-metal complexes; metal-bipyridine complexes such as rubidium-bipyridine complexes and iridium-phenanthroline complexes; metal-phenanthroline complexes; naphthalenediimides such as N-alkylnaphthalenediimide; acridones such as N-methylacridone and N-butyl-2-chloroacridone; thioxanthones such as 2,4-diethylthioxanthone, xanthones, and xanthenes; acridines such as acridine yellow; coumarins such as coumarin 6 and coumarin 314; biacetyls such as 2,3-butanedione; anthracenes such as 9,10-dibromoanthracene and 9,9'-bianthryl; oligoaryls such as bifuran, bithiophene, and bis(benzoxazolyl)thiophene; and fused polycyclic hetero aromatic compounds such as chrysene, phenanthrene or derivatives thereof. The triplet sensitizers are not limited to those described above.

In the organic solid upconversion material of the exemplary embodiment, at least one of the two or more triplet sensitizers is preferably an organic metal complex, and each of the two or more triplet sensitizers is more preferably an organic metal complex. The "organic metal complex" encompasses both an organometallic compound having a metal-carbon bond and a metal complex having a coordinate bond. The metal complex having a coordinate bond includes metal and a ligand that coordinates to the metal.

The organic metal complex serving as the triplet sensitizer easily transfers light energy to the organic luminescent material. The metal atom that forms the organic metal complex serving as the triplet sensitizer is not particularly limited but is, for instance, at least one metal atom selected from the group consisting of Li, Mg, Al, Ti, V, Mn, Fe, Co, Ni, Cu, Zn, Ga, Ru, Pd, Ag, Re, Os, Ir, Pt, and Pb. The metal atom that forms the organic metal complex serving as the triplet sensitizer is preferably Pt or Pd.

In the organic solid upconversion material of the exemplary embodiment, at least one of the two or more triplet sensitizers preferably contains a platinum atom and is more preferably an organic metal complex containing a platinum atom.

In the organic solid upconversion material of the exemplary embodiment, each of the two or more triplet sensitizers preferably contains a platinum atom, and is more preferably an organic metal complex containing a platinum atom.

Examples of the ligand in the organic metal complex include porphyrins and substitution products thereof, such as octaethylporphyrin; phthalocyanines and substitution products thereof, such as tetra-tert-butyl phthalocyanine; and naphthalocyanines and substitution products thereof, such as tetra-tert-butyl naphthalocyanine.

Examples of substituents in the substitution products include hydrocarbon groups such as linear hydrocarbon groups, e.g., alkyl groups (such as a methyl group, ethyl group, and t-butyl group), alkenyl groups (such as a vinyl group and allyl group), and alkynyl groups (such as an ethynyl group and propynyl group); and hydrocarbon groups having an acid group, e.g., carboxyalkyl groups (such as a carboxymethyl group and carboxyethyl group).

Of these, the ligand in the organic metal complex is preferably porphyrin or a substitution product thereof or phthalocyanine or a substitution product thereof, more preferably porphyrin or a substitution product thereof, and still more preferably a substitution product of porphyrin.

Specific examples of the organic metal complex serving as the triplet sensitizer include metal complexes of porphyrin or substitution products thereof and metal complexes of phthalocyanine or substitution products thereof. Of these, metal complexes of porphyrin or substitution products thereof are preferred.

The metal atom included in metalloporphyrins (metal complexes of porphyrins) and metallophthalocyanines (metal complexes of phthalocyanines) is, for instance, at least one metal atom selected from the group consisting of Pt, Pd, Ru, Rh, Ir, Zn, and Cu. Porphyrin and substitution products thereof may be referred to as porphyrins, and phthalocyanine and substitution products thereof may be referred to as phthalocyanines.

It is also preferable that the organic metal complex serving as the triplet sensitizer be at least one metal complex selected from the group consisting of Pt complexes including, as a ligand, porphyrin or a substitution product thereof, Pt complexes including, as a ligand, phthalocyanine or a substitution product thereof, Pt complexes including, as a ligand, naphthalocyanine or a substitution product thereof, Pd complexes including, as a ligand, porphyrin or a substitution product thereof, Pd complexes including, as a ligand, phthalocyanine or a substitution product thereof, and Pd complexes including, as a ligand, naphthalocyanine or a substitution product thereof.

Of the examples of the triplet sensitizer, examples of the triplet sensitizer having the local maximum absorption wavelength $\lambda_{MAX}$(TS) in a range from 500 nm to 700 nm and including metal in the structure thereof include a compound represented by a formula (20) below.

[Formula 10]

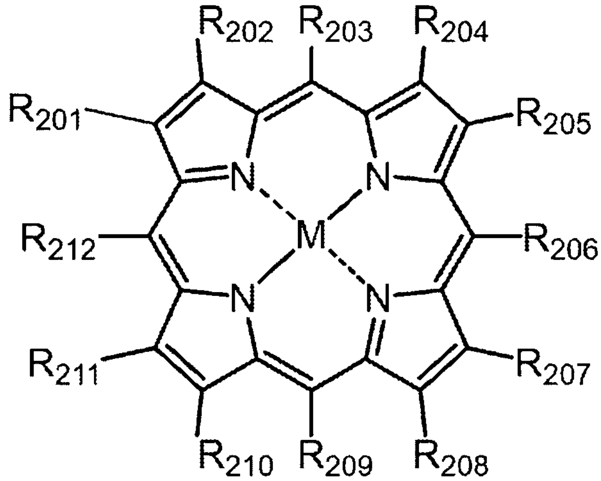

(20)

In the formula (20): $R_{201}$, $R_{202}$, $R_{204}$, $R_{205}$, $R_{207}$, $R_{208}$, $R_{210}$, and $R_{211}$ are each independently a hydrogen atom or any substituent including a hydrophilic functional group; $R_{201}$, $R_{202}$, $R_{204}$, $R_{205}$, $R_{207}$, $R_{208}$, $R_{210}$, and $R_{211}$ are mutually the same or different; two of $R_{201}$, $R_{202}$, $R_{204}$, $R_{205}$, $R_{207}$, $R_{208}$, $R_{210}$ and $R_{211}$ that are adjacent to each other may be bonded together to form a five-membered ring or six-membered ring having any substituent including a hydrogen atom; $R_{203}$, $R_{206}$, $R_{209}$, and $R_{212}$ each independently represent an aryl group having any substituent including a hydrogen atom; $R_{203}$, $R_{206}$, $R_{209}$, and $R_{212}$ are mutually the same or different; and M represents a metal atom.

Herein, the term "any substituent including a hydrogen atom" means a hydrogen atom or any substituent other than a hydrogen atom. Furthermore, when a plurality of "any substituents including a hydrogen atom" are present, the plurality of "any substituents including a hydrogen atom" may be bonded together to form a five-membered ring or six-membered ring having any substituent including a hydrogen atom or may not be bonded together.

At least one of $R_{201}$, $R_{202}$, $R_{204}$, $R_{205}$, $R_{207}$, $R_{208}$, $R_{210}$ or $R_{211}$ in the formula (20) is a hydrophilic functional group, and specific examples of the hydrophilic functional group include a hydrogen atom, alkyl group (e.g., alkyl group having 1 to 12 carbon atoms), alkenyl group, alkynyl group, halogen atom, hydroxy group (hydroxyl group), alkylcarbonyloxy group, arylcarbonyloxy group, alkoxycarbonyloxy group, aryloxycarbonyloxy group, carboxylate group, alkylcarbonyl group, arylcarbonyl group, alkoxycarbonyl group, aminocarbonyl group, alkylaminocarbonyl group, dialkylaminocarbonyl group, alkylthiocarbonyl group, alkoxy group, phosphate group, phosphonate group, phosphinate group, thiocarboxylate group, sulfate group, sulfenate group, sulfinate group, sulfonate group, phosphoric acid group, phosphonic acid group, phosphinic acid group, thiocarboxylic acid group, sulfuric acid group, sulfenic acid group, sulfinic acid group, sulfonic acid group, cyano group, amino groups (including alkylamino group, dialkylamino group, arylamino group, diarylamino group, and alkylarylamino group), acylamino groups (including alkylcarbonylamino group, arylcarbonylamino group, carbamoyl group, and ureido group), amidino group, imino group, sulfhydryl group, alkylthio group, arylthio group, alkylsulfinyl group, sulfamoyl group, sulfonamide group, nitro group, trifluoromethyl group, cyano group, azide group, heterocyclic group, alkylaryl group, aryl group, and heteroaryl group; however, the hydrophilic functional group is not limited thereto.

Examples of the substituent on the five-membered ring or six-membered ring formed by bonding together two adjacent ones of $R_{201}$, $R_{202}$, $R_{204}$, $R_{205}$, $R_{207}$, $R_{208}$, $R_{210}$, and $R_{211}$ included in the formula (20) include, but are not limited to, the substituents cited as examples of $R_{201}$, $R_{202}$, $R_{204}$, $R_{205}$, $R_{207}$, $R_{208}$, $R_{210}$, and $R_{211}$. The five-membered ring or six-membered ring may or may not be linked to another substituted or unsubstituted porphyrin ring.

Examples of $R_{203}$, $R_{206}$, $R_{209}$, and $R_{212}$ in the formula (20) include, but are not limited to, substituents cited as examples of $R_{201}$, $R_{202}$, $R_{204}$, $R_{205}$, $R_{207}$, $R_{208}$, $R_{210}$, and $R_{211}$.

The metal atom M in the formula (20) is, for instance, at least one metal atom selected from the group consisting of Pt, Pd, Ru, Rh, Ir, Zn, and Cu.

Examples of the metalloporphyrins represented by the formula (20) include meso-tetraphenyl-tetrabenzoporphyrin metal complexes such as meso-tetraphenyl-tetrabenzoporphyrin palladium (CAS No.: 119654-64-7), octaethylporphyrin metal complexes such as octaethylporphyrin palladium (CAS No.: 24804-00-0), and octaethylporphyrin metal complexes such as meso-tetraphenyl-octamethoxy-tetranaphtho[2,3]porphyrin palladium described in a literature (Y. Murakami et al., J. Phy., Chem. B, 118 (2014) 14442).

Examples of the metallotetraazaporphyrins include a compound represented by a formula (21) below.

[Formula 11]

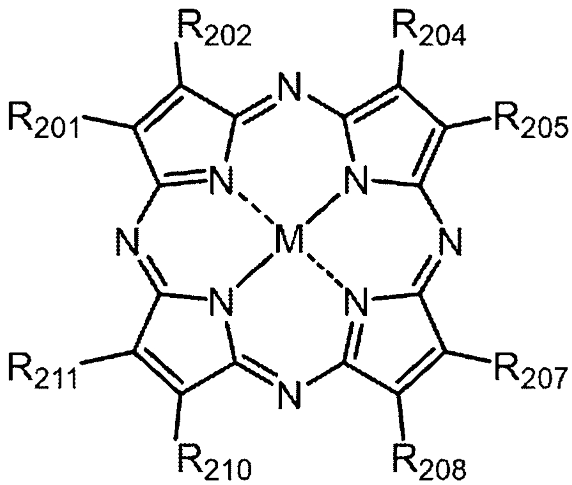

(21)

In the formula (21), $R_{201}$, $R_{202}$, $R_{204}$, $R_{205}$, $R_{207}$, $R_{208}$, $R_{210}$, $R_{211}$, and M respectively represent the same as $R_{201}$, $R_{202}$, $R_{204}$, $R_{205}$, $R_{207}$, $R_{208}$, $R_{210}$, $R_{211}$, and M in the formula (20).

The compound represented by the formula (20) is also preferably a compound represented by a formula (22) below.

[Formula 12]

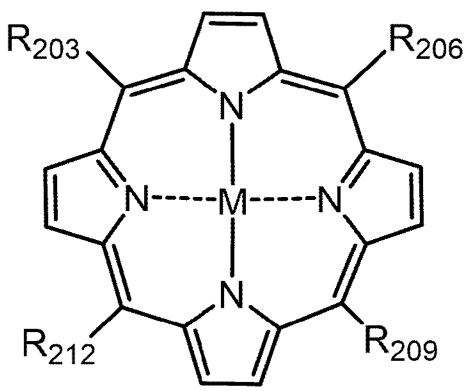

**(22)**

In the formula (22), $R_{203}$, $R_{206}$, $R_{209}$, $R_{212}$, and M respectively represent the same as $R_{203}$, $R_{206}$, $R_{209}$, $R_{212}$, and M in the formula (20).

It is also preferable that the organic solid upconversion material of the exemplary embodiment contain, as the triplet sensitizer, one or more compounds selected from the group consisting of the compounds represented by the

formulae (21) and (22).

It is also preferable that the organic solid upconversion material of the exemplary embodiment at least contain, as the two or more triplet sensitizers, both of the compound represented by the formula (21) and the compound represented by the formula (22).

In the organic solid upconversion material of the exemplary embodiment, an alkyl group, an aryl group, and a heteroaryl group in the compounds represented by the formulae (20), (21) and (22) are preferably a substituted or unsubstituted alkyl group having 1 to 50 carbon atoms, a substituted or unsubstituted aryl group having 6 to 50 ring carbon atoms or a substituted or unsubstituted fused aryl group having 10 to 50 ring carbon atoms, and a substituted or unsubstituted heteroaryl group having 5 to 50 ring atoms, respectively. Specific examples of these groups include the aforementioned substituted or unsubstituted alkyl group having 1 to 50 carbon atoms, substituted or unsubstituted aryl group having 6 to 50 ring carbon atoms or substituted or unsubstituted fused aryl group having 10 to 50 ring carbon atoms, and substituted or unsubstituted heterocyclic group having 5 to 50 ring atoms.

The triplet sensitizer may be an organic photosensitizing molecule that includes no metal in the structure thereof. Use of the triplet sensitizer including no metal can avoid generation of environmental pollution due to metal in the production and disposal of the organic solid upconversion material. Specific examples of the triplet sensitizer including no metal include a compound represented by a formula (23) below (boron dipyrromethenes) and C70. These triplet sensitizers may be used alone or as a mixture of two or more thereof.

[Formula 13]

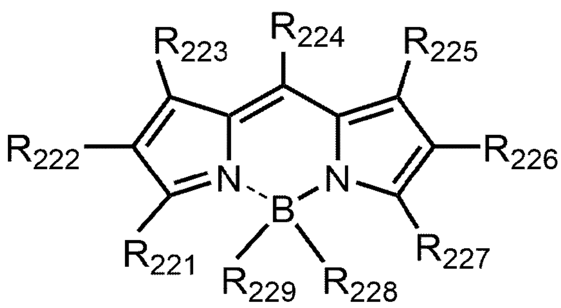

**(23)**

**In** the formula (23): $R_{221}$ to $R_{227}$ each independently represent a hydrogen atom or any substituent including a hydrophilic functional group; at least one of $R_{221}$ to $R_{227}$ is a hydrophilic functional group; among $R_{221}$ to $R_{227}$, substituents adjacent to each other (at least one of the pair of $R_{221}$ and $R_{222}$, the pair of $R_{222}$ and $R_{223}$, the pair of $R_{225}$ and $R_{226}$, or the pair of $R_{226}$ and $R_{227}$) may be bonded together to form a five-membered ring or six-membered ring having any substituent including a hydrogen atom; and $R_{228}$ and $R_{229}$ each independently represent a halogen atom, a hydrophilic functional group, a substituted or unsubstituted alkyl group having 1 to 5 carbon atoms, or a substituted or unsubstituted alkoxy group having 1 to 5 carbon atoms.

At least one of $R_{221}$ to $R_{227}$ in the formula (23) is a hydrophilic functional group, and specific examples of the hydrophilic functional group include, but are not limited to, a hydrogen atom, aliphatic hydrocarbon groups such as alkyl group, alkenyl group, and alkynyl group, halogen atom, hydroxy group (hydroxyl group), alkylcarbonyloxy group, arylcarbonyloxy group, alkoxycarbonyloxy group, aryloxycarbonyloxy group, carboxylate group, alkylcarbonyl group, arylcarbonyl group, alkoxycarbonyl group, aminocarbonyl group, alkylaminocarbonyl group, dialkylaminocarbonyl group, alkylthiocarbonyl group, alkoxy group, phosphate group, phosphonate group, phosphinate group, thiocarboxylate group, sulfate group, sulfenate group, sulfinate group, sulfonate group, phosphoric acid group, phosphonic acid group, phosphinic acid group, thiocarboxylic acid group, sulfuric acid group, sulfenic acid group, sulfinic acid group, sulfonic acid group, cyano group, amino groups (including alkylamino group, dialkylamino group, arylamino group, diarylamino group, and alkylarylamino group), acylamino groups (including alkylcarbonylamino group, arylcarbonylamino group, carbamoyl group, and ureido group), amidino group, imino group, sulfhydryl group, alkylthio group, arylthio group, alkylsulfinyl group, sulfamoyl group, sulfonamide group, nitro group, trifluoromethyl group, cyano group, azide group, heterocyclic group, alkylaryl group, phenoxy group, aryl group, heteroaryl group, and heteroaryloxy group.

Examples of the substituent on the five-membered ring or six-membered ring formed by bonding together substituents adjacent to each other (at least one of the pair of $R_{221}$ and $R_{222}$, the pair of $R_{222}$ and $R_{223}$, the pair of $R_{225}$ and $R_{226}$, or the pair of $R_{226}$ and $R_{227}$) included in the formula (23) include, but are not limited to, the substituents cited as examples of $R_{221}$ to $R_{227}$.

$R_{221}$, $R_{223}$, $R_{225}$, and $R_{227}$ in the formula (23) may be each independently, for instance, a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or

unsubstituted thienyl group, a substituted or unsubstituted thienoxy group, a 2-carboxylethenyl group represented by a formula (24) below, or a 2-carboxyl-2-cyanoethenyl group represented by a formula (25) below.

[Formula 14]

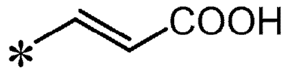

(24)

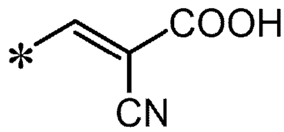

(25)

$R_{222}$ and $R_{226}$ in the formula (23) are preferably each independently a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by the formula (24), or a 2-carboxyl-2-cyanoethenyl group represented by the formula (25).

More preferably, $R_{222}$ and $R_{226}$ in the formula (23) are each independently a hydrogen atom, a bromine atom, or an iodine atom, and at least one of $R_{222}$ or $R_{226}$ is a bromine atom or an iodine atom.

Still more preferably, $R_{222}$ and $R_{226}$ in the formula (23) are each independently a hydrogen atom or an iodine atom, and at least one of $R_{222}$ or $R_{226}$ is an iodine atom.

$R_{224}$ in the formula (23) is preferably a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by the formula (24), or a 2-carboxyl-2-cyanoethenyl group represented by the formula (25).

$R_{224}$ in the formula (23) is more preferably a substituted or unsubstituted phenyl group.

$R_{224}$ in the formula (23) is still more preferably an unsubstituted phenyl group, an alkyl-substituted phenyl group, or a phenyl group having a hydrophilic functional group.

$R_{228}$ and $R_{229}$ in the formula (23) are each independently a halogen atom, a hydrophilic functional group, a substituted or unsubstituted alkyl group having 1 to 5 carbon atoms, or a substituted or unsubstituted alkoxy group having 1 to 5 carbon atoms, and $R_{228}$ and $R_{229}$ in the formula (23) are preferably fluorine atoms.

The compound represented by the formula (23) is more preferably a compound in which $R_{221}$ to $R_{227}$ are each independently a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by the formula (24), or a 2-carboxyl-2-cyanoethenyl group represented by the formula (25).

The compound represented by the formula (23) is still more preferably a compound represented by a formula (26) below. The compound represented by the formula (26) below can achieve an optical upconversion material having a higher light wavelength conversion efficiency.

[Formula 15]

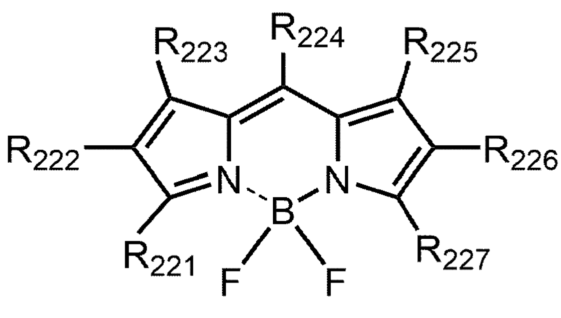

(26)

In the formula (26): $R_{221}$, $R_{223}$, $R_{225}$, and $R_{227}$ each independently represent a hydrophilic functional group or a

substituted or unsubstituted alkyl group having 1 to 3 carbon atoms; $R_{222}$ and $R_{226}$ each independently represent a hydrogen atom, a bromine atom, or an iodine atom; at least one of $R_{222}$ or $R_{226}$ is a bromine atom or an iodine atom; and $R_{224}$ represents a substituted or unsubstituted phenyl group.

The triplet sensitizer is preferably the metalloporphyrin represented by the formula (20) or the compound represented by the formula (23).

In the organic solid upconversion material of the exemplary embodiment, specific examples of the triplet sensitizers include the following compounds; however, the invention is not limited to the following compounds.

[Formula 16]

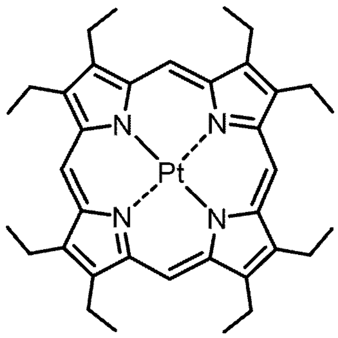
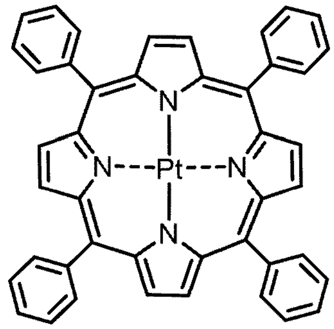
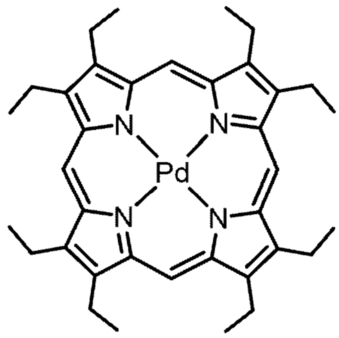
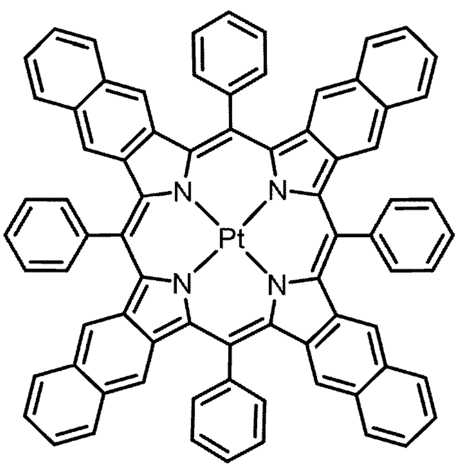
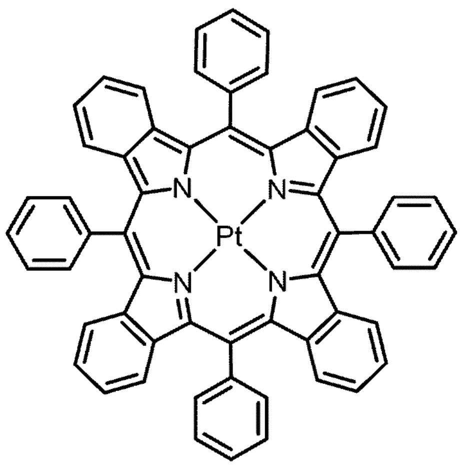

The sum of the content of the triplet sensitizers and the content of the organic luminescent material in the organic solid upconversion material of the exemplary embodiment is preferably 90 mass% or more, more preferably 95 mass% or more, and still more preferably 99 mass% or more.

Production Method of Organic Solid Upconversion Material

The organic solid upconversion material of the exemplary embodiment can be produced by a method including, for instance, Step (P1) of dissolving the triplet sensitizers and the organic luminescent material in a first solvent to prepare a starting solution, Step (P2) of heating the starting solution, Step (P3) of adding a second solvent to the heated starting solution, and Step (P4) of cooling the starting solution to which the second solvent has been added to precipitate a solid solution crystal. The production method of the organic solid upconversion material of the exemplary embodiment is preferably a recrystallization method including Steps (P1) to (P4) above.

The production method of the organic solid upconversion material of the exemplary embodiment enables the production of a solid solution crystal in which the two or more triplet sensitizers are dissolved in a crystal of the organic luminescent material. The formation of this solid solution is considered to be due to the entropy effect. This system in which molecules of the organic luminescent material and the two or more triplet sensitizers are mixed is a binary eutectic system (eutectic system with limited miscibility) as illustrated in Fig. 3. In the production method of the organic solid upconversion material of the exemplary embodiment, a solid solution crystal can be formed by causing crystallization while maintaining an equilibrium state.

The first solvent is a good solvent for the triplet sensitizers and the organic luminescent material, and the second solvent is a poor solvent for the triplet sensitizers and the organic luminescent material. The good solvent serving as the first solvent and the poor solvent serving as the second solvent are each independently selected as appropriate depending on the types of the triplet sensitizers and the organic luminescent material serving as the solute. The good solvent serving as the first solvent is, for instance, at least one solvent selected from the group consisting of toluene, ethylbenzene, octylbenzene, and chloroform. The poor solvent serving as the second solvent is, for instance, at least one solvent selected from the group consisting of ethanol, butanol, acetonitrile, and hexane.

For instance, in Step (P1), the triplet sensitizers and the organic luminescent material are preferably dissolved in the first solvent at room temperature (e.g., in a range from 20 degrees C to 25 degrees C) to prepare a starting solution.

For instance, Step (P1) may be Step (P1A), in which the two or more triplet sensitizers and the organic luminescent material are dissolved together in the first solvent to prepare a starting solution.

Alternatively, for instance, Step (P1) may be Step (P1B), in which the two or more triplet sensitizers are each individually dissolved in the first solvent to prepare two or more sensitizer starting solutions in accordance with the number of the triplet sensitizers, and the organic luminescent material is dissolved in the first solvent to prepare a luminescent material starting solution, after which the luminescent material starting solution and the two or more sensitizer starting solutions are mixed. In Step (P1B) above, a plurality of starting solutions (the luminescent material starting solution and the two or more sensitizer starting solutions) may be mixed while being heated. The organic solid upconversion material of the exemplary embodiment can also be produced by performing Steps (P2), (P3), and (P4) after mixing the plurality of starting solutions.

In Step (P4), the starting solution to which the second solvent has been added is preferably cooled to room temperature (e.g., in a range from 20 degrees C to 25 degrees C) to precipitate the crystal.

It is preferable that the production method of the organic solid upconversion material of the exemplary embodiment further include, after Step (P4) above, Step (P5) of separating the solid solution crystal from the first solvent and the second solvent. The method for separating the solid solution crystal from the first solvent and the second solvent may be, for instance, a method of filtration.

It is also preferable that the method further include, after Step (P5) above, Step (P6) of drying the solid solution crystal by heating (which may be referred to as a post-heating step). By Step (P6) above, defects in the solid solution crystal structure are reduced to improve crystallinity, and the upconversion quantum efficiency is further improved.

The production method of the exemplary embodiment enables the production of an organic solid upconversion material that exhibits a high upconversion luminous intensity for excitation light including light having a wide wavelength range, such as sunlight.

## Examples

The invention will be described in further detail with reference to Examples. The invention is by no means limited to these Examples.

## Compound

The structure of an organic luminescent material used in Example 1 is given below. A compound A1 is 9-(2-naphthyl)-10-[4-(1-naphthyl)phenyl]anthracene (herein, the compound A1 may be abbreviated as ANNP).

[Formula 17]

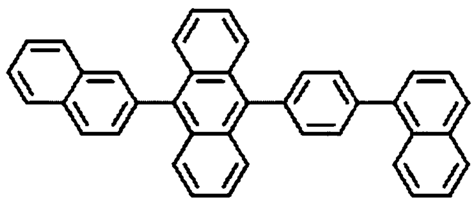

A1

The structures of triplet sensitizers used in Example 1 and Comparatives 1 and 2 are given below.

[Formula 18]

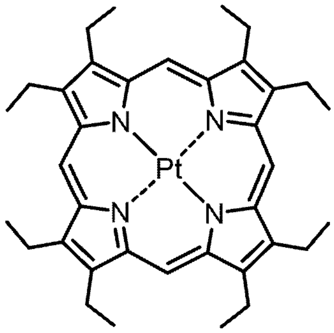

PtOEP

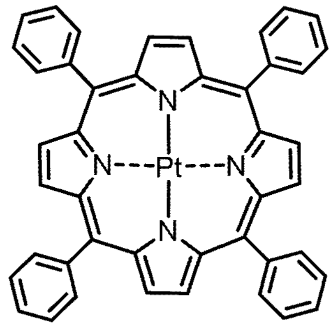

PtTPP

Example 1

In Example 1, a compound PtOEP serving as the first triplet sensitizer was first dissolved in toluene serving as the first solvent to prepare a first sensitizer starting solution A having a concentration of $1.74 \times 10^{-4}$ M. Next, a compound PtTPP serving as the second triplet sensitizer was dissolved in toluene serving as the first solvent to prepare a second sensitizer starting solution B having a concentration of $1.42 \times 10^{-4}$ M. Each of the first sensitizer starting solution A and the second sensitizer starting solution B was filtered through a PTFE filter with a pore size of 200 nm to remove slight insoluble matter in these sensitizer starting solutions. Furthermore, the compound A1 serving as the organic luminescent material was dissolved in toluene serving as the first solvent to prepare a luminescent material starting solution C having a concentration of $2.0 \times 10^{-2}$ M. Subsequently, the first sensitizer starting solution A, the second sensitizer starting solution B, and the luminescent material starting solution C were mixed on a hot plate at 80 degrees C to prepare a mixed starting solution D. Next, ethanol heated to 80 degrees C serving as the second solvent was added to the mixed starting solution D heated to 80 degrees C until a volume ratio of toluene to ethanol reached 1:3. Ethanol was a poor solvent for PtOEP, PtTPP, and the compound A1. Subsequently, the mixed starting solution D after the addition of ethanol was cooled to room temperature and was then left for two to three days to precipitate an organic solid crystal. The precipitated organic solid crystal was collected and dried to obtain an organic solid UC material according to Example 1. In the organic solid UC material according to Example 1, the molar ratio of the organic luminescent material to the triplet sensitizers was A1:PtOEP:PtTPP = 45,000:1:6.

Comparative 1

In Comparative 1, the first sensitizer starting solution A and the luminescent material starting solution C were first prepared in the same manner as in Example 1. Subsequently, the first sensitizer starting solution A and the luminescent material starting solution C were mixed on a hot plate at 80 degrees C to prepare a mixed starting solution E. Next, ethanol heated to 80 degrees C serving as the second solvent was added to the mixed starting solution E heated to 80 degrees C until the volume ratio of toluene to ethanol reached 1:3. Thereafter, the mixed starting solution E after the addition of ethanol was cooled to room temperature and was then left for two to three days to precipitate an organic solid crystal. The precipitated organic solid crystal was collected and dried to obtain an organic solid UC material according to Comparative 1. In the organic solid UC material according to Comparative 1, the molar ratio of the organic luminescent material to the triplet sensitizer was A1:PtOEP = 45,000:1.

Comparative 2

In Comparative 2, the second sensitizer starting solution B and the luminescent material starting solution C were first prepared in the same manner as in Example 1. Subsequently, the second sensitizer starting solution B and the luminescent material starting solution C were mixed on a hot plate at 80 degrees C to prepare a mixed starting solution F. Next, ethanol heated to 80 degrees C serving as the second solvent was added to the mixed starting solution F heated to 80 degrees C until the volume ratio of toluene to ethanol reached 1:3. Thereafter, the mixed starting solution F after the addition of ethanol was cooled to room temperature and was then left for two to three days to precipitate an organic solid crystal. The precipitated organic solid crystal was collected and dried to obtain an organic solid UC material according to Comparative 2. In the organic solid UC material according to Comparative 2, the molar ratio of the organic luminescent material to the triplet sensitizer was A1:PtTPP = 7,600:1.

Evaluation of Physical Properties, etc.

Measurement of Absorption Spectrum

The measurement of the solution absorption spectrum was performed as follows. First, a measurement target compound was dissolved in toluene to prepare a toluene solution. The prepared toluene solution was put in a quartz cell, and the absorption spectrum of the toluene solution was measured with an optical path length of 1 mm at room temperature (300 K). The ordinate axis of the absorption spectrum represents an absorbance and the abscissa axis thereof represents a wavelength (unit: nm). As the absorption spectrum measurement apparatus, a spectrophotometer (manufactured by Shimadzu Corporation, UV-Vis-NIR spectrophotometer, model name: UV-3600) was used.

In this Example, PtOEP was dissolved in toluene to prepare a first toluene solution having a concentration of $6.0 \times 10^{-5}$ M, PtTPP was dissolved in toluene to prepare a second toluene solution having a concentration of $6.0 \times 10^{-5}$ M, PtOEP and PtTPP were dissolved in toluene to prepare a third toluene solution, and these toluene solutions were used to measure the absorption spectra. In the third toluene solution, the concentration of PtOEP was $5.4 \times 10^{-6}$ M and the concentration of PtTPP was $3.2 \times 10^{-5}$ M.

The solid-state absorption spectrum was obtained by placing the organic solid UC material of Example 1, Comparative 1, or Comparative 2 under a transmission microscope using a white LED as a light source, measuring the transmittance of the light from the light source, and converting the measured transmittance into the absorption spectrum. The ordinate axis of the solid-state absorption spectrum represents a light absorption coefficient (unit: $mm^{-1}$) and the abscissa axis thereof represents a wavelength (unit: nm). A polarization microscope manufactured by Olympus Corporation (model name: BX53-P) was used as the transmission microscope.

The solution absorption spectra and the solid-state absorption spectra are illustrated in Figs. 5A, 5B, and 5C. Fig. 5A illustrates the absorption spectra of the solution containing PtOEP (the first toluene solution) and the organic solid UC material of Comparative 1. Fig. 5B illustrates the absorption spectra of the solution containing PtTPP (the second toluene solution) and the organic solid UC material of Comparative 2. Fig. 5C illustrates the absorption spectra of the solution containing PtOEP and PtTPP (the third toluene solution) and the organic solid UC material of Example 1.

As illustrated in Figs. 5A and 5B, it was found that the maximum absorption wavelength $\lambda_{MAX}$(TS-1) of the compound PtOEP as the first triplet sensitizer and the maximum absorption wavelength $\lambda_{MAX}$(TS-2) of the compound PtTPP as the second triplet sensitizer, which were in a wavelength region longer than the maximum emission wavelength $\lambda_{MAX}$(EM) of 439 nm ($\lambda_{MAX}$(EM) = 439 nm) of the compound A1 as the organic luminescent material, were different from each other. Moreover, the solution absorption spectrum illustrated in Fig. 5C was the sum of the absorption spectrum of PtOEP and the absorption spectrum of PtTPP. Thus, it was found that an organic solid UC material in which a plurality of triplet sensitizers (e.g., the two triplet sensitizers of PtOEP and PtTPP in Example 1) coexisted in the crystal of the organic luminescent material exhibited a broad light absorption characteristic including both the absorption bands of PtOEP and PtTPP. From the solid-state absorption spectrum illustrated in Fig. 5C, the molar ratio of PtOEP to PtTPP in the organic solid UC material of Example 1 was estimated to be about 1:6.

As a wavelength region in which the organic solid UC material is used, the maximum absorption wavelength $\lambda_{MAX}$(TS) in the solution absorption spectrum of each triplet sensitizer and the maximum absorption wavelength $\lambda_{MAX}$(MC) in the solid-state absorption spectrum of the prepared organic solid UC material (a mixture containing the organic luminescent material and the triplet sensitizer(s)), which were in a wavelength region longer than the maximum emission wavelength $\lambda_{MAX}$(EM) of 439 nm ($\lambda_{MAX}$(EM) = 439 nm) of the compound A1 as the organic luminescent material, were measured and the maximum absorption wavelength difference $\lambda_{MAX}$(MC) - $\lambda_{MAX}$(TS) was calculated. The measurement results are shown in Table 2.

The maximum emission wavelength $\lambda_{MAX}$(EM) in the solid-state emission spectrum of the compound A1 serving as the organic luminescent material described above was measured using an absolute PL quantum yield spectrometer manufactured by Hamamatsu Photonics K.K. (model name: Quantaurus-QY, model number: C11347-01).

As shown in Figs. 5A, 5B, and 5C and in Table 2, as for PtOEP serving as the first triplet sensitizer, the maximum absorption wavelength $\lambda_{MAX}$(TS-1) in the solution absorption spectrum was 535 nm, and the maximum absorption wavelength $\lambda_{MAX}$(MC-1) in the solid-state absorption spectrum was 538 nm. Accordingly, the maximum absorption wavelength difference was 3 nm ($\lambda_{MAX}$(MC-1) - $\lambda_{MAX}$(TS-1) = 3 nm). It should be noted that, in the solid-state absorption spectrum in Fig. 5C, the peak light absorption coefficient (unit: $mm^{-1}$) at the wavelength of 538 nm corresponding to PtOEP is smaller than the peak light absorption coefficient at the wavelength of 512 nm corresponding to PtTPP. However, since the maximum absorption wavelength $\lambda_{MAX}$(MC-1) represents the absorption peak exhibiting the maximum light absorption coefficient among the absorption peaks attributable to PtOEP, and therefore the term "maximum absorption wavelength" is used instead of the term "local maximum absorption wavelength" for convenience of explanation. As for PtTPP serving as the second triplet sensitizer, the maximum absorption wavelength $\lambda_{MAX}$(TS-2) in the solution absorption spectrum was 509 nm, and the maximum absorption wavelength $\lambda_{MAX}$(MC-2) in the solid-state absorption spectrum was 512 nm. Accordingly, the maximum absorption wavelength difference of the second triplet sensitizer was 3

nm ($\lambda_{MAX}$(MC-2) - $\lambda_{MAX}$(TS-2) = 3 nm).

Of the maximum absorption wavelength $\lambda_{MAX}$(TS-1) of PtOEP as the first triplet sensitizer and the maximum absorption wavelength $\lambda_{MAX}$(TS-2) of PtTPP as the second triplet sensitizer, the maximum absorption wavelength $\lambda_{LWMAX}$(TS) closest to a long-wavelength region was 538 nm ($\lambda_{MAX}$(TS-1) = 538 nm), and the maximum absorption wavelength $\lambda_{SWMAX}$(TS) closest to a short-wavelength region was 509 nm ($\lambda_{MAX}$(TS-2) = 509 nm). The difference $\Delta\lambda_{MAX}$ was thus 29 nm ($\Delta\lambda_{MAX} = \lambda_{LWMAX}$(TS) - $\lambda_{SWMAX}$(TS) = 538 - 509 = 29 nm).

Appearance Observation

For the crystal of each of the organic solid UC materials of Example 1, Comparative 1, and Comparative 2, as well as the crystal of the compound A1 alone, the appearance was directly photographed with a digital camera, and appearance observation was performed. Fig. 4A shows a digital camera image of the compound A1 alone in a colorless crystalline state. Fig. 4B shows a digital camera image of the organic solid UC material according to Comparative 1 in a crystalline state having a color attributable to the compound PtOEP as the first triplet sensitizer. Fig. 4C shows a digital camera image of the organic solid UC material according to Comparative 2 in a crystalline state having a color attributable to the compound PtTPP as the second triplet sensitizer. Fig. 4D shows a digital camera image of the organic solid UC material according to Example 1 in a crystalline state having a color attributable to the compound PtOEP and the compound PtTPP. The color of the crystal of the organic solid UC material according to Example 1 was deeper than the color of the crystal of the organic solid UC material that contained a single triplet sensitizer as in Comparative 1 and Comparative 2.

Single-Crystal X-ray Structure Analysis

The single-crystal X-ray structure analysis was performed on the organic luminescent material used as a starting material and on the prepared organic solid UC material of Comparative 1 to measure unit cell parameters. The single-crystal X-ray structure analysis was performed using a single-crystal X-ray diffractometer (model name: XtaLAB Synergy-R/DW) manufactured by Rigaku Corporation.

The measurement results of the unit cell parameters are shown in Table 1. In Table 1, a, b, and c represent the lengths (unit: angstroms: Å) of sides of the unit cell, and $\alpha$, $\beta$, and $\gamma$ represent the angles between the sides of the unit cell. V represents the volume (unit: cubic angstroms: $Å^3$) of the unit cell, Z represents the number of molecules included in the unit cell, and the molar volume is calculated by a numerical formula: $(V/Z) \times N_A$. $N_A$ is Avogadro's number.

Not only the digital camera images in Figs. 4A and 4B but also the results of the single-crystal X-ray structure analysis shown in Table 1 revealed that the organic luminescent material and the organic solid UC material of Comparative 1 were each in a crystalline form. It was found from the digital camera images in Figs. 4C and 4D that each of the organic solid UC materials of Example 1 and Comparative 2 was also in a crystalline form.

Triplet Excitation Lifetime

The triplet excitation lifetime (unit: milliseconds: ms) of each of the prepared organic solid UC materials was measured by the following method. Specifically, a sample was irradiated with pulsed excitation light having a wavelength of 540 nm and a frequency of 20 Hz, the decay behavior of the upconversion luminous intensity from the sample was measured, and a constant $\tau$ obtained by fitting the resulting decay curve with an exponential function $\exp(-t/\tau)$ was defined as the triplet excitation lifetime of the organic solid UC material. In the exponential function, t represents the time elapsed since the pulsed excitation light intensity becomes zero. The measurement results of the triplet excitation lifetime are shown in Table 1.

UC Luminous Intensity and UC Emission Spectrum

The UC luminous intensity (upconversion luminous intensity) of each of the prepared organic solid UC materials was measured by the following method. Specifically, simulated sunlight of Air Mass 1.5 (AM1.5) was first generated by a solar simulator (manufactured by Asahi Spectra Co., Ltd., model name: HAL-320). Next, the simulated sunlight (broadband light) generated was let through a long-pass filter (manufactured by Asahi Spectra Co., Ltd., model name: F02A) to obtain excitation light only in a wavelength range exceeding 500 nm ($\lambda > 500$ nm), and each of the organic solid UC materials was irradiated with the obtained excitation light. Of light emitted from the organic solid UC material, a component of the excitation light reflected was removed by an optical filter, and the light was then captured in a spectrum meter to measure the upconversion luminous intensity. AM1.5 represents the spectral intensity of sunlight reaching the Earth, and is global standard data established by the National Renewable Energy Laboratory (NREL) of the U.S. Department of Energy, and a unit "SUN" represents the intensity of sunlight. The intensity of the simulated sunlight at a sample position

was set as follows. First, without using the long-pass filter, a 1 SUN checker (manufactured by Asahi Spectra Co., Ltd., model name: CS-20) was placed at the sample position, and the intensity was set to "one day" intensity by adjusting the output of the solar simulator. Next, the long-pass filter was installed. After the installation, since the installed long-pass filter indicated a transmittance of about 95% in a wavelength range of light absorption by PtOEP and PtTPP, the output of the solar simulator was increased by 1.05 times in order to compensate for a decrease in the light intensity at the sample position due to the installation of the long-pass filter. The light intensity at the sample position in this state was defined as 1 SUN. The measurement procedure and conditions are described in R. Enomoto, M. Hoshi, H. Oyama, H. Agata, S. Kurokawa, H. Kuma, H. Uekusa and Y. Murakami, Mater. Horiz., 2021, 8, 3449.

Fig. 6 illustrates an emission spectrum of each of the organic solid UC materials of Example 1, Comparative 1, and Comparative 2. The ordinate axis of the emission spectrum represents a UC luminous intensity and the abscissa axis thereof represents a wavelength. The emission spectrum of the powder of the compound A1 was also measured in the same manner as for the organic solid UC materials. The spectrum obtained by subtracting the measured emission spectrum, as the baseline spectrum, from the emission spectrum of each of the organic solid UC materials is illustrated in Fig. 6. In the emission spectra in Fig. 6, the local maximum emission peaks were observed in a wavelength region of about 420 nm to 480 nm. In the emission spectra of the organic solid UC materials of Example 1, Comparative 1, and Comparative 2, neither emission at 650 nm (monomeric phosphorescence of PtOEP) nor emission at 670 nm (monomeric phosphorescence of PtTPP) was observed. That is, it was found that, in the organic solid UC material of Example 1, PtOEP and PtTPP serving as the triplet sensitizers were dispersed within the crystal of the organic luminescent material, and the triplet energies of PtOEP and PtTPP generated by the excitation light were efficiently transferred to the organic luminescent material. The organic solid UC material of Example 1 exhibited an enhancement factor about 1.85 times that of the organic solid UC material of Comparative 1. The enhancement factor was calculated based on spectral integration over the wavelength range from 420 nm to 480 nm.

From the results shown in Fig. 6, it was found that the organic solid UC material containing the organic luminescent material and the two or more triplet sensitizers having the maximum absorption wavelengths $\lambda_{MAX}$(TS) different from each other, as in the organic solid UC material of Example 1, exhibited a high upconversion luminous intensity for excitation light including light having a wide wavelength range, such as sunlight.

Molar Concentration of Triplet Sensitizer

The molar concentration (unit: mol/L) of the triplet sensitizer in each of the prepared organic solid UC materials was measured by the following method. Specifically, solution cells in which toluene solutions having various different concentrations of the triplet sensitizer were enclosed were first prepared, and the transmittances were measured with the same transmission microscope as the transmission microscope used in the measurement of the solid-state absorption spectrum to prepare a calibration curve of molar concentration versus absorbance. Next, after the thickness of the organic solid UC material was measured, the organic solid UC material was disposed under the same transmission microscope as the above, and the absorbance was measured to calculate an absorbance in the case where the film thickness was the same as that of the solution cell. Lastly, the absorbance of the organic solid UC material was compared with the calibration curve to thereby determine the molar concentration of the triplet sensitizer in the organic solid UC material. The molar concentration of the triplet sensitizer can be measured by the above method, regardless of whether the organic solid UC material contains two or more triplet sensitizers or one triplet sensitizer. This is because the optical absorption spectrum of a sample containing a plurality of triplet sensitizers corresponds to the superposition of the optical absorption spectra of samples each containing one of the triplet sensitizers.

Molar Ratio Between Triplet Sensitizer and Organic Luminescent Material in Organic Solid UC Material

The molar ratio between the triplet sensitizer and the organic luminescent material in the organic solid UC material was calculated as the ratio between the molar concentration of the triplet sensitizer in the organic solid UC material determined by the transmittance measurement using the transmission microscope, and the molar concentration of the organic luminescent material in the organic solid UC material determined by the single-crystal X-ray structure analysis. The volume (unit: L) of the unit cell of the crystal and the number (unit: mol) of molecules of the compound A1 included in the unit cell were obtained through the single-crystal X-ray structure analysis. The molar concentration (unit: mol/L) of the compound A1 in the crystal of the organic solid UC material was obtained by dividing the number of molecules of the compound A1 by the volume of the unit cell of the crystal. In the organic solid UC materials prepared in Example and Comparatives, the number of molecules of the triplet sensitizer(s) was far smaller than the number of molecules of the organic luminescent material. Therefore, the crystal of the organic solid UC material and the crystal of the compound A1 were almost the same in volume of the unit cell. Accordingly, the volume of the unit cell of the crystal of the compound A1 was used as that of each of the organic solid UC materials prepared in Example and Comparatives.

Lowest Triplet Energy $T_1$

A measurement target compound was dissolved in EPA (diethylether:isopentane:ethanol = 5:5:2 in volume ratio) so as to have a concentration of 10 μmol/L to prepare a solution, and the solution was put in a quartz cell to provide a measurement sample. A phosphorescence spectrum (ordinate axis: phosphorescent luminous intensity, abscissa axis: wavelength) of the measurement sample was measured at a low temperature (77[K]). A tangent was drawn to the rise of the phosphorescence spectrum close to the short-wavelength region. An amount of energy calculated from a conversion equation (F1) below on a basis of a wavelength value $\lambda_{edge}$ [nm] at an intersection of the tangent and the abscissa axis was defined as the lowest triplet energy $T_1$. It should be noted that the lowest triplet energy $T_1$ may have an error of about plus or minus 0.02 eV depending on measurement conditions.

$$\text{Conversion Equation (F1): } T_1 \text{ [eV]} = 1239.85/\lambda_{edge}$$

The tangent to the rise of the phosphorescence spectrum close to the short-wavelength region is drawn as follows. While moving on a curve of the phosphorescence spectrum from the short-wavelength region to the local maximum value closest to the short-wavelength region among the local maximum values of the phosphorescence spectrum, a tangent is checked at each point on the curve toward the long wavelength of the phosphorescence spectrum. An inclination of the tangent increases along the rise of the curve (i.e., a value of the ordinate axis increases). A tangent drawn at a point of the local maximum inclination (i.e., a tangent at an inflection point) is defined as the tangent to the rise of the phosphorescence spectrum close to the short-wavelength region.

A local maximum point where a peak intensity is 15% or less of the maximum peak intensity of the spectrum is not counted as the above-mentioned local maximum value closest to the short-wavelength region. A tangent drawn at a point that is closest to the local maximum value closest to the short-wavelength region and where the inclination of the curve is the local maximum value is defined as a tangent to the rise of the phosphorescence spectrum close to the short-wavelength region.

For phosphorescence measurement, a spectrophotofluorometer body F-4500 manufactured by Hitachi High-Technologies Corporation was used.

Lowest Singlet Energy $S_1$

A toluene solution of a measurement target compound at a concentration of 10 μmol/L was prepared and put in a quartz cell. An absorption spectrum (ordinate axis: absorption intensity, abscissa axis: wavelength) of the thus-obtained sample was measured at a normal temperature (300K). A tangent is drawn to the fall of the absorption spectrum close to the long-wavelength region, and a wavelength value $\lambda_{edge}$ [nm] at an intersection of the tangent and the abscissa axis is assigned to a conversion equation (F2) below to calculate the lowest singlet energy.

$$\text{Conversion Equation (F2): } S_1 \text{ [eV]} = 1239.85/\lambda\text{edge}$$

A spectrophotometer manufactured by Hitachi, Ltd. (model name: U3310) was used as the device for measuring an absorption spectrum.

The tangent to the fall of the absorption spectrum close to the long-wavelength region is drawn as follows. While moving on a curve of the absorption spectrum from the local maximum value closest to the long-wavelength region, among the local maximum values of the absorption spectrum, in a long-wavelength direction, a tangent at each point on the curve is checked. An inclination of the tangent is decreased and increased in a repeated manner as the curve falls (i.e., a value of the ordinate axis is decreased). A tangent drawn at a point where the inclination of the curve is the local minimum value and that is closest to the long-wavelength region (provided that a case where the absorbance is 0.1 or less is excluded) is defined as the tangent to the fall of the absorption spectrum close to the long-wavelength region.

The local maximum absorbance of 0.2 or less is not counted as the above-mentioned local maximum absorbance closest to the long-wavelength region.

Table 1

| | | Comp. 1 Solid Material | Organic Luminescent Material |
|---|---|---|---|
| Compound | | A1 + PtOEP | A1 |
| | a [Å] | 18.8241 | 18.8286 |
| | b [Å] | 7.5014 | 7.4980 |

(continued)

| | | Comp. 1 Solid Material | Organic Luminescent Material |
|---|---|---|---|
| Unit Cell Parameters | c [Å] | 38.7559 | 38.7615 |
| | a [°] | 90 | 90 |
| | $\beta$ [°] | 96.531 | 96.684 |
| | $\gamma$ [°] | 90 | 90 |
| | V [$Å^3$] | 5437.1 | 5435.03 |
| | Z [number] | 8 | 8 |
| | Molar volume [$cm^3$/mol] | 409.29 | 405.70 |
| Triplet Excitation Lifetime [ms] | | 5 | - |

Table 2

| | | | Ex. 1 | Comp. 1 | Comp. 2 |
|---|---|---|---|---|---|
| Organic Luminescent Material | Name | | A1 | A1 | A1 |
| | $S_1$ [eV] | | 3.00 | 3.00 | 3.00 |
| | $T_1$ [eV] | | 1.80 | 1.80 | 1.80 |
| Triplet Sensitizer(s) | Name | | PtOEP and PtTPP | PtOEP | PtTPP |
| | $S_1$ [eV] | | - | 2.53 | 2.55 |
| | $T_1$ [eV] | | - | 1.96 | 1.93 |
| | Local maximum absorption wavelength $\lambda_{LMAX}$ [nm] in solution absorption spectrum | | 508, 535 | 502, 535 | 509, 538 |
| | Maximum absorption wavelength $\lambda_{MAX}$(TS) [nm] in solution absorption spectrum | | 508 | 535 | 509 |
| Organic Solid UC Material | Maximum absorption wavelength $\lambda_{MAX}$ (MC) in solid-state absorption spectrum [nm] | $\lambda_{MAx}$ (MC-1 ) | 538 | 538 | - |
| | | $\lambda_{MAX}$ (MC-2) | 512 | - | 512 |
| | Maximum absorption wavelength difference $\lambda_{MAX}$(MC) - $\lambda_{MAX}$(TS) [nm] | $\lambda_{MAX}$(MC-1) - $\lambda_{MAX}$(TS-1) | 3 | 3 | - |
| | | $\lambda_{MAX}$(MC-2) - $\lambda_{MAX}$(TS-2) | 3 | - | 3 |
| | Molar concentration of triplet sensitizer(s) [mol/L] | | PtOEP: $5.4\times10^{-5}$ and PtTPP: $3.2\times10^{-4}$ | $5.6\times10^{-5}$ | $4.5\times10^{-4}$ |

**Claims**

**1.** An organic solid upconversion material, comprising:

two or more triplet sensitizers; and

an organic luminescent material, wherein

when a wavelength at which a luminous intensity in a solid-state emission spectrum of the organic luminescent material is at a maximum is defined as a maximum emission wavelength $\lambda_{MAX}$(EM), and a wavelength at which an absorbance in a solution absorption spectrum of each of the two or more triplet sensitizers is at a maximum in a wavelength region longer than the maximum emission wavelength $\lambda_{MAX}$(EM) is defined as a maximum absorption wavelength $\lambda_{MAX}$(TS), the maximum absorption wavelengths $\lambda_{MAX}$(TS) of the two or more triplet sensitizers are different from each other,

a lowest triplet energy of each of the two or more triplet sensitizers is equal to or larger than a lowest triplet energy of the organic luminescent material, and

a lowest singlet energy of each of the two or more triplet sensitizers is smaller than a lowest singlet energy of the organic luminescent material.

**2.** The organic solid upconversion material according to claim 1, wherein the two or more triplet sensitizers and the organic luminescent material form a solid solution crystal.

**3.** The organic solid upconversion material according to claim 1 or 2, wherein when, among the maximum absorption wavelengths $\lambda_{MAX}$(TS) of the two or more triplet sensitizers, the maximum absorption wavelength $\lambda_{MAX}$(TS) closest to a long-wavelength region is defined as a maximum absorption wavelength $\lambda_{LWMAX}$(TS) and the maximum absorption wavelength $\lambda_{MAX}$(TS) closest to a short-wavelength region is defined as a maximum absorption wavelength $\lambda_{SWMAX}$ (TS), a difference $\Delta\lambda_{MAX}$ between the maximum absorption wavelength $\lambda_{LWMAX}$(TS) and the maximum absorption wavelength $\lambda_{SWMAX}$(TS) is in a range from 10 nm to 120 nm.

**4.** The organic solid upconversion material according to any one of claims 1 to 3, wherein a total molar concentration of the two or more triplet sensitizers in the organic solid upconversion material is $2.0 \times 10^{-5}$ mol/L or more.

**5.** The organic solid upconversion material according to any one of claims 1 to 4, wherein a molar concentration of each of the two or more triplet sensitizers in the organic solid upconversion material is in a range from $1.0 \times 10^{-5}$ mol/L to $5.0 \times 10^{-3}$ mol/L.

**6.** The organic solid upconversion material according to any one of claims 1 to 5, wherein when a wavelength at which a light absorption coefficient of each of the two or more triplet sensitizers in a solid-state absorption spectrum of the organic solid upconversion material is at a maximum in a wavelength region longer than the maximum emission wavelength $\lambda_{MAX}$(EM) of the organic luminescent material is defined as a maximum absorption wavelength $\lambda_{MAX}$ (MC), a difference $\lambda_{MAX}$(MC) - $\lambda_{MAX}$(TS) between the maximum absorption wavelength $\lambda_{MAX}$(MC) and the maximum absorption wavelength $\lambda_{MAX}$(TS) is 10 nm or less in each of the two or more triplet sensitizers.

**7.** The organic solid upconversion material according to any one of claims 1 to 6, wherein the organic luminescent material is an anthracene derivative.

**8.** The organic solid upconversion material according to claim 7, wherein the organic luminescent material is a compound represented by a formula (10) below or a compound represented by a formula (11) below,

[Formula 1]

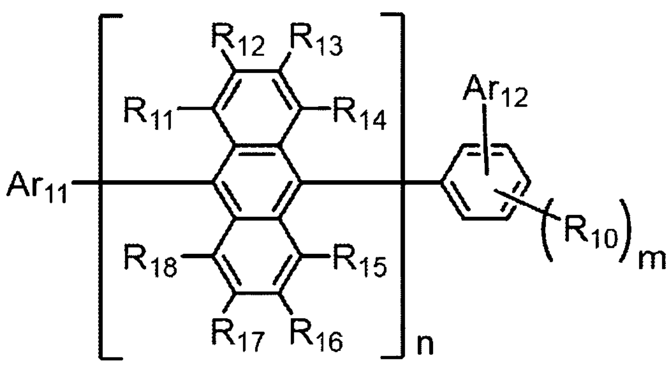

(10)

where, in the formula (10):

$Ar_{11}$ is a substituted or unsubstituted fused aryl group having 10 to 50 ring carbon atoms;
$Ar_{12}$ is a substituted or unsubstituted aryl group having 6 to 50 ring carbon atoms;
$R_{10}$ to $R_{18}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a carboxy group, a halogen atom, a cyano group, a nitro group, or a hydroxy group;
m is 4, and four $R_{10}$ are mutually the same or different;
n is 1, 2, or 3; and
when n is 2 or 3, groups represented by a formula (10a) below in the compound represented by the formula (10) are mutually the same or different, and each * represents a bonding position, and

[Formula 2]

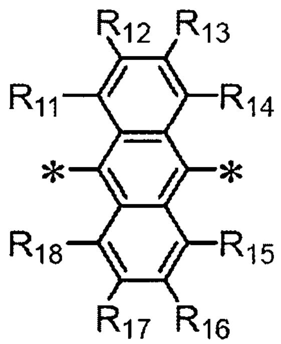

(10a)

[Formula 3]

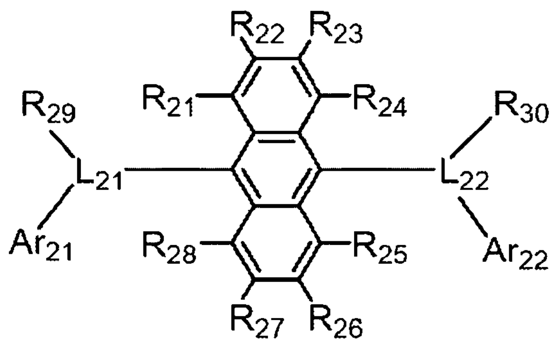

(11)

where, in the formula (11):

$L_{21}$ and $L_{22}$ are each independently a substituted or unsubstituted fused aryl group having 10 to 20 ring carbon atoms;
$Ar_{21}$ and $Ar_{22}$ are each independently a hydrogen atom or a substituted or unsubstituted aryl group having 6 to 50 ring carbon atoms;
$R_{21}$ to $R_{30}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a substituted or unsubstituted silyl group, a carboxy group, a halogen atom, a cyano group, a nitro group,

or a hydroxy group;

a plurality of $Ar_{21}$, a plurality of $Ar_{22}$, a plurality of $R_{29}$, and a plurality of $R_{30}$ are optionally present;

a combination of adjacent two or more of $Ar_{21}$ and $R_{29}$ are mutually bonded to form a substituted or unsubstituted monocyclic ring, mutually bonded to form a substituted or unsubstituted fused ring, or not mutually bonded;

a combination of adjacent two or more of $Ar_{22}$ and $R_{30}$ are mutually bonded to form a substituted or unsubstituted monocyclic ring, mutually bonded to form a substituted or unsubstituted fused ring, or not mutually bonded; and

a group represented by a formula (11a) below and a group represented by a formula (11b) below in the compound represented by the formula (11) are mutually different, and each * represents a bonding position,

[Formula 4]

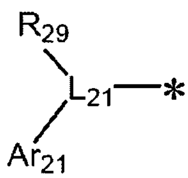

(11a)

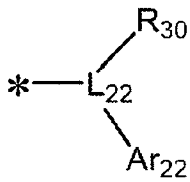

(11b)

**9.** The organic solid upconversion material according to any one of claims 1 to 8, wherein the two or more triplet sensitizers each comprise an organic metal complex.

**10.** The organic solid upconversion material according to any one of claims 1 to 9, wherein the two or more triplet sensitizers each comprise a platinum atom.

FIG.1

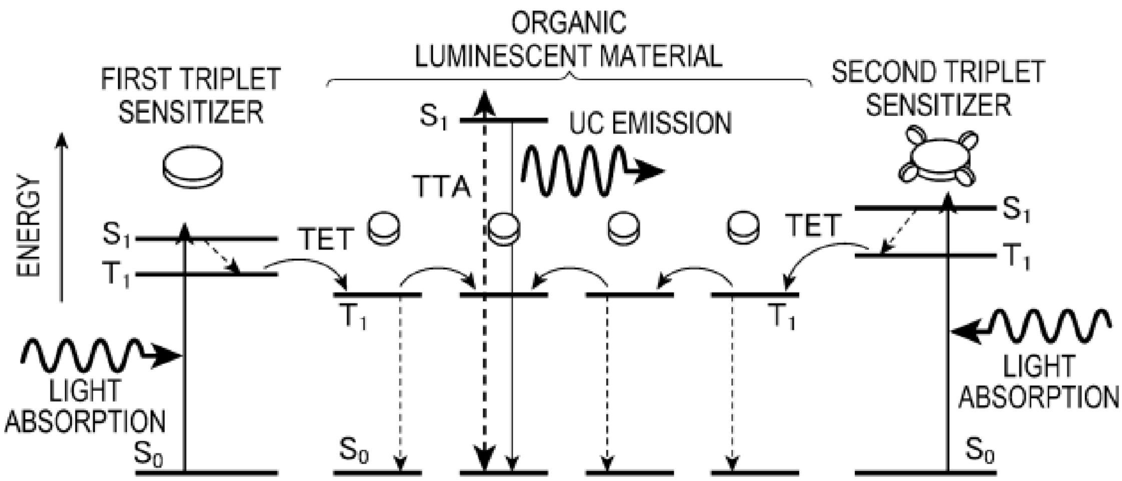
ORGANIC
LUMINESCENT MATERIAL
FIRST TRIPLET
SENSITIZER
SECOND TRIPLET
SENSITIZER
ENERGY
S1
T1
S0
TET
TTA
UC EMISSION
LIGHT
ABSORPTION

FIG. 2A

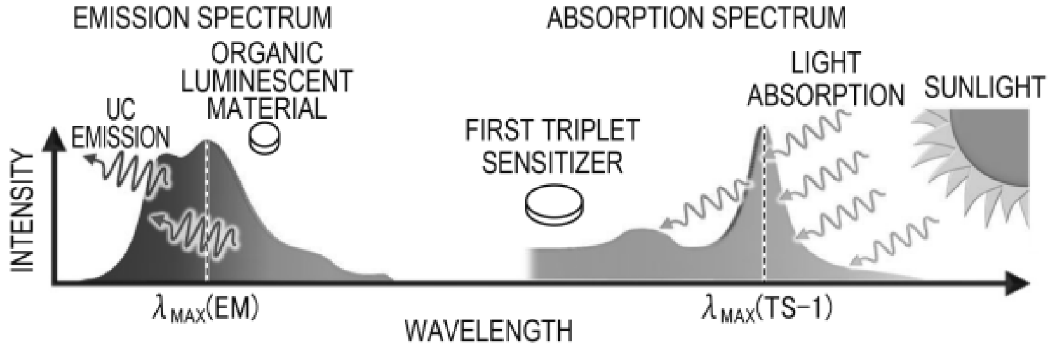


FIG. 2B

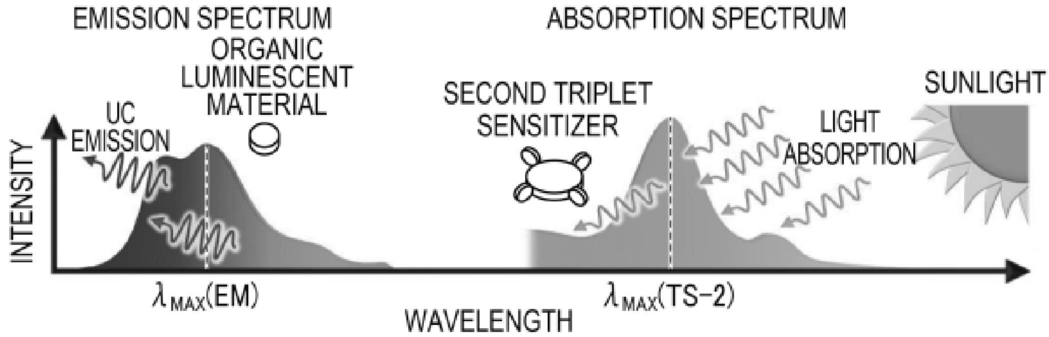


FIG. 2C

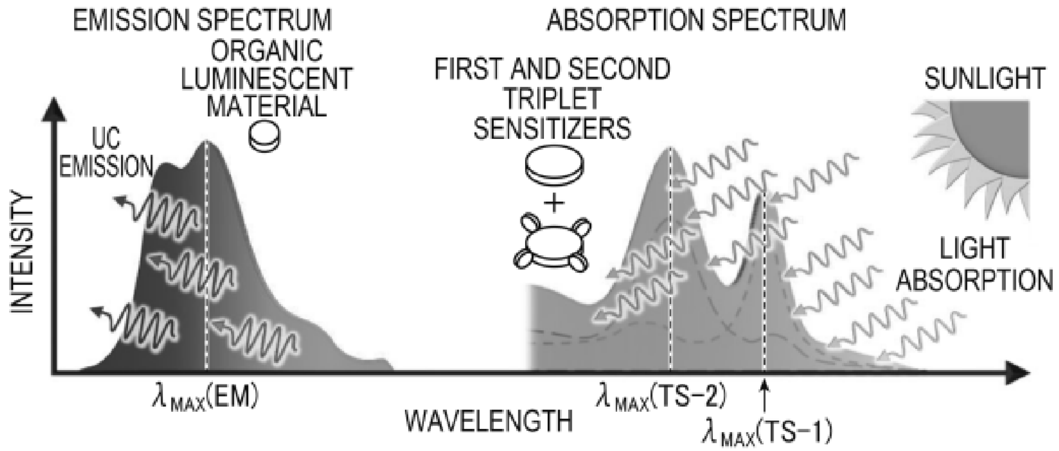

FIG.3

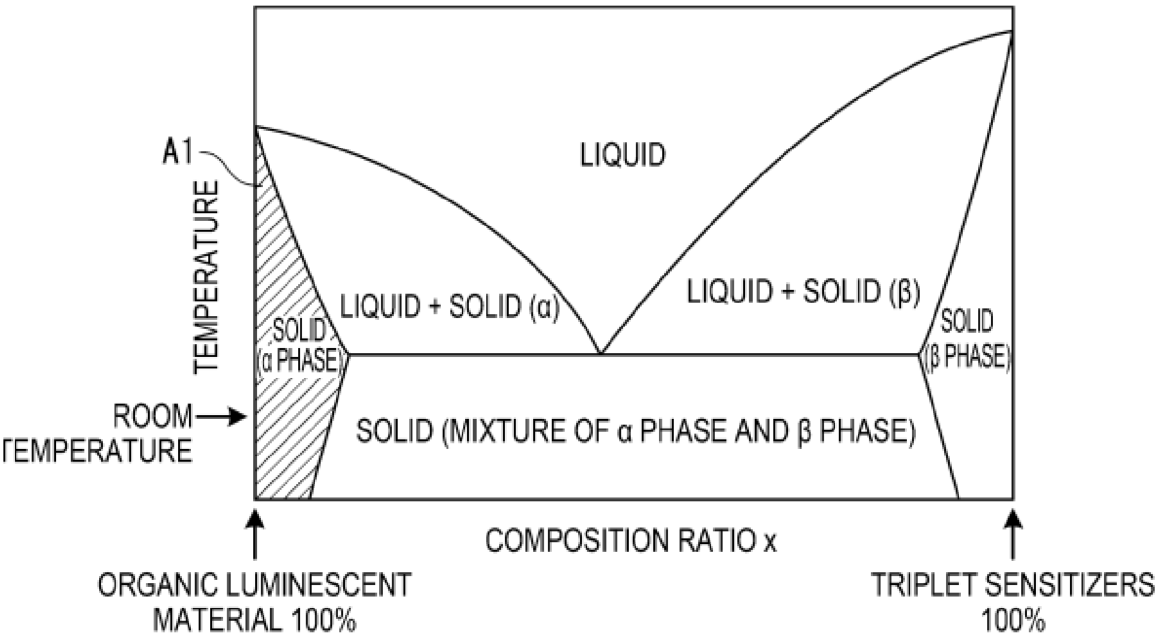
LIQUID
LIQUID + SOLID (α)
LIQUID + SOLID (β)
SOLID (α PHASE)
SOLID (β PHASE)
SOLID (MIXTURE OF α PHASE AND β PHASE)
A1
TEMPERATURE
ROOM TEMPERATURE
COMPOSITION RATIO x
ORGANIC LUMINESCENT MATERIAL 100%
TRIPLET SENSITIZERS 100%

FIG.4A

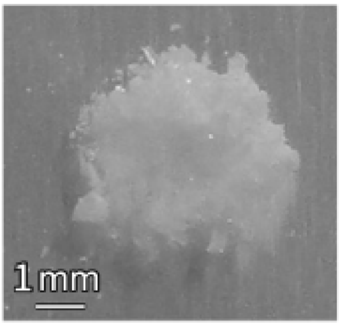


FIG.4B

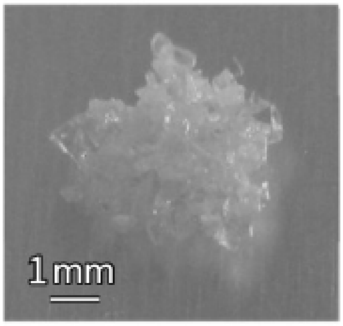


FIG.4C

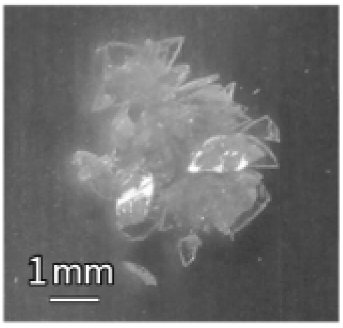


FIG.4D

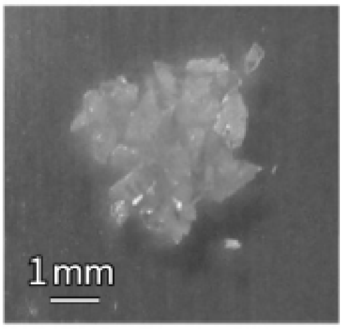

FIG.5A

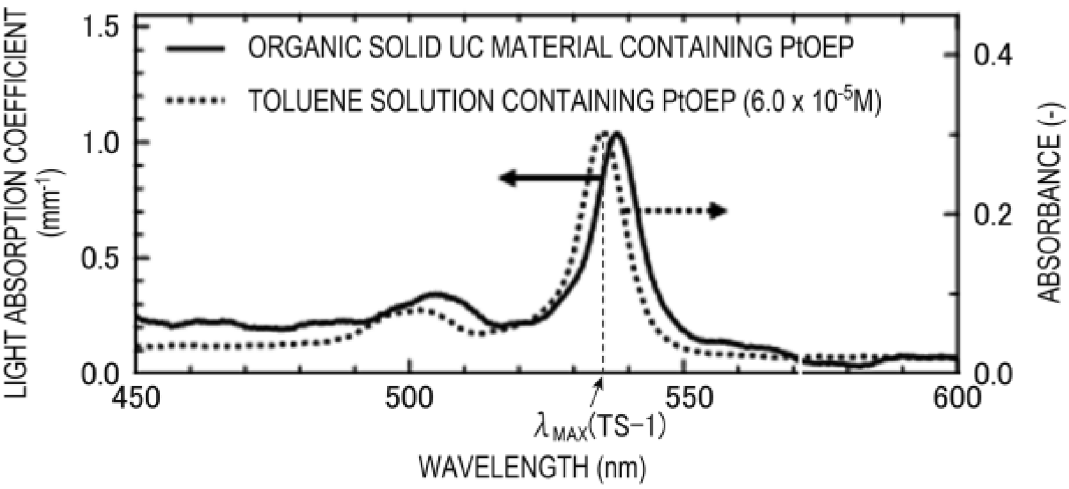


FIG.5B

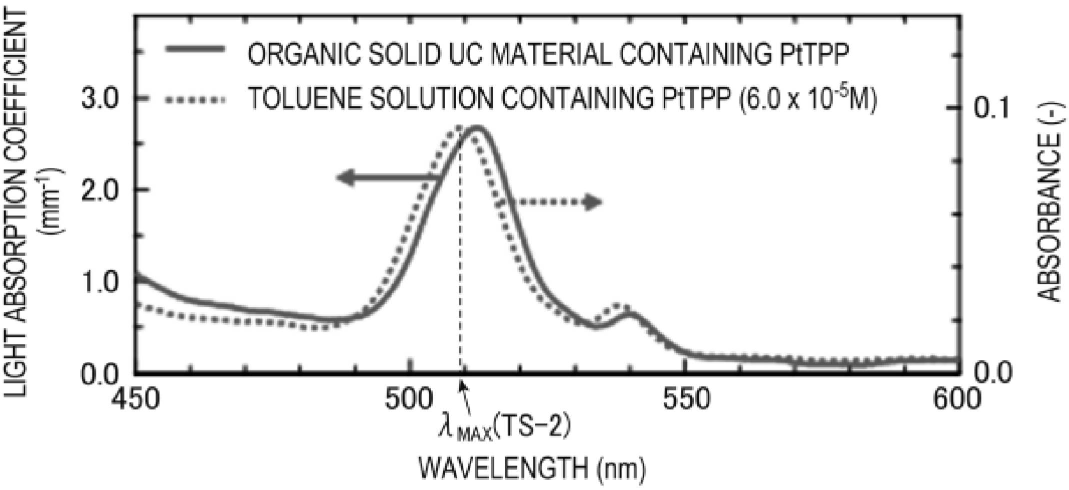


FIG.5C

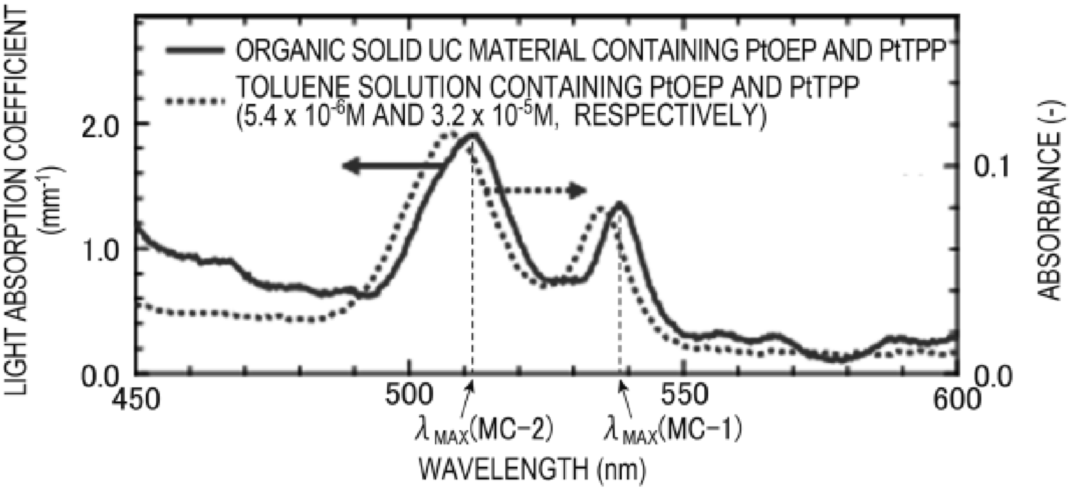

FIG. 6

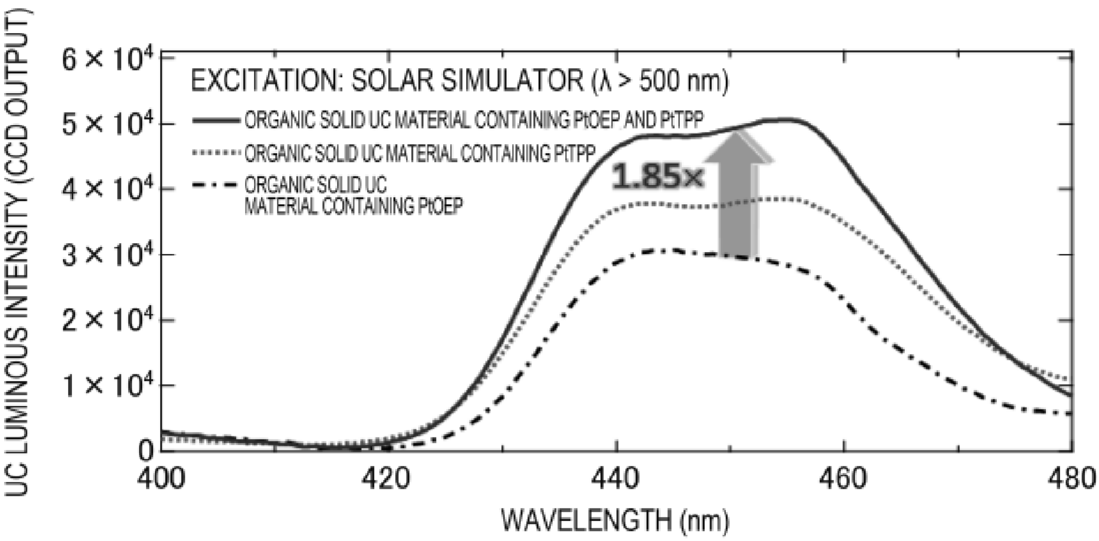
UC LUMINOUS INTENSITY (CCD OUTPUT)
6 × 10⁴
5 × 10⁴
4 × 10⁴
3 × 10⁴
2 × 10⁴
1 × 10⁴
0
EXCITATION: SOLAR SIMULATOR (λ > 500 nm)
ORGANIC SOLID UC MATERIAL CONTAINING PtOEP AND PtTPP
ORGANIC SOLID UC MATERIAL CONTAINING PtTPP
ORGANIC SOLID UC MATERIAL CONTAINING PtOEP
1.85×
400
420
440
460
480
WAVELENGTH (nm)

## INTERNATIONAL SEARCH REPORT

International application No.
**PCT/JP2024/031950**

**A. CLASSIFICATION OF SUBJECT MATTER**

***C09K 11/06***(2006.01)i; ***G02B 5/20***(2006.01)i
FI: C09K11/06; G02B5/20; C09K11/06 610

According to International Patent Classification (IPC) or to both national classification and IPC

**B. FIELDS SEARCHED**

Minimum documentation searched (classification system followed by classification symbols)

C09K11/06; G02B5/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-171699 A (TOKYO INSTITUTE OF TECHNOLOGY) 28 September 2017 (2017-09-28)<br>claims, paragraphs [0016], [0031]-[0033], [0037], [0040]-[0041], [0052], [0063], tables 1, 4 | 1, 3-10 |
| Y | claims, paragraphs [0016], [0031]-[0033], [0037], [0040]-[0041], [0052], [0063], tables 1, 4 | 2 |
| Y | WO 2023/063289 A1 (IDEMITSU KOSAN CO., LTD.) 20 April 2023 (2023-04-20)<br>paragraph [0031] | 2 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/031950**

| Patent document cited in search report | Publication date (day/month/year) | Patent family member(s) | Publication date (day/month/year) |
|---|---|---|---|
| JP 2017-171699 A | 28 September 2017 | (Family: none) | |
| WO 2023/063289 A1 | 20 April 2023 | EP 4417670 A1<br>paragraph [0031] | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020111751 A
- US 10950803 B2
- WO 2023063289 A1
- WO 2004018587 A
- WO 2005061656 A


### Non-patent literature cited in the description


- *Journal of Applied Physics*, 2007, vol. 101, 023101
- *J. Phys. Chem. Lett.*, 2013, vol. 4, 4113-4118
- *J. Phys. Chem. C*, 2014, vol. 118, 14256-14265
- *Mater. Horiz.*, 2017, vol. 4, 83-87
- *J. Mater. Chem. C*, 2018, vol. 6, 5609-5615
- **Y. MURAKAMI et al.** *J. Phy., Chem. B*, 2014, vol. 118, 14442
- **R. ENOMOTO** ; **M. HOSHI** ; **H. OYAMA** ; **H. AGATA** ; **S. KUROKAWA** ; **H. KUMA** ; **H. UEKUSA** ; **Y. MURAKAMI**. *Mater. Horiz.*, 2021, vol. 8, 3449